# EUROPÄISCHE PATENTSCHRIFT

(11) **EP 2 389 285 B1**
(45) Veröffentlichungstag und Bekanntmachung des Hinweises auf die Patenterteilung: **22.06.2016**
(21) Anmeldenummer: 10803580.9
(22) Anmeldetag: 01.12.2010
(51) Int. Cl.: B29C 67/00, B22F 3/00, B22F 3/105

(54) **BESCHICHTER FÜR EINE RAPID-PROTOTYPING-ANLAGE**
HOPPER FOR A RAPID PROTOTYPING INSTALLATION
TRÉMIE POUR UNE INSTALLATION DE PROTOTYPAGE RAPIDE

(30) Priorität: 02.12.2009 DE 102009056689
(43) Veröffentlichungstag der Anmeldung: 30.11.2011
(73) Patentinhaber: Exone GmbH, 86167 Augsburg (DE)
(72) Erfinder: HÖCHSMANN, Rainer, 86863 Langenneufnach (DE); MÜLLER, Alexander, 86343 Königsbrunn (DE)
(74) Vertreter: Viering, Jentschura & Partner mbB Patent- und Rechtsanwälte
(86) Internationale Anmeldenummer: PCT/EP2010/068672
(87) Internationale Veröffentlichungsnummer: WO 2011/067301

(56) Entgegenhaltungen:
- DE-A1-102005 056 260

## Beschreibung

Die vorliegende Erfindung betrifft einen Beschichter, insbesondere einen Beschichter gemäß dem Oberbegriff von Anspruch 1.

Folglich betrifft die vorliegende Erfindung einen Beschichter für eine Anlage oder in einer Anlage zum schichtweisen Aufbau eines Formkörpers, mit dem gleichmäßige Schichten aus zu verfestigendem Baumaterial, z.B. ein Partikelmaterial oder ein Gemisch enthaltend Partikelmaterial, während der Fahrt des Beschichters aus einem langgestreckten Dosierschacht mit einem unteren Ausgabe-Längsschlitz auf ein Baufeld, z.B. eine Bauplattform eines in der Anlage angeordneten Baubehälters, in mehrfacher Wiederholung aufeinander aufgebracht werden können, wozu der Beschichter horizontal über die Bauplattform hinweg verfahrbar ist. Die Schichten werden jeweils nach ihrer Aufbringung in selektiven Teilbereichen verfestigt, so dass der Formkörper aus den selektiv verfestigten Teilbereichen aufgebaut wird.

Aus der WO 00/78485 A2 ist ein Beschichter bekannt, der vor einer Beschichtungsfahrt aus einem ortsfesten/stationären Vorratsbehälter befüllt wird.

Ein zweiteiliger Beschichter, welcher außer einem Dosierschacht zum Ausgeben des Baumaterials zusätzlich einen mitfahrenden Vorratsbehälter (= Vorlagebehälter) aufweist, ist z.B. aus der DE 10 2005 056 260 A1 bekannt, welche einen Beschichter der eingangs genannten Art offenbart.

Wie in der DE 10 2005 056 260 A1 beschrieben ist, bringt ein Vorlagebehälter z.B. die Vorteile mit sich, dass während der Beschichtungsfahrt ein konstanter Baumaterial-Füllstand in dem Dosierschacht aufrechterhalten werden kann und dass eine Vorverteilung des Baumaterials in dem Vorlagebehälter ermöglicht wird.

Der in der DE 10 2005 056 260 A1 offenbarte zweiteilige Beschichter ist, verglichen mit einem einteiligen Beschichter ohne mitfahrenden Vorlagebehälter, jedoch komplizierter zu handhaben, insbesondere komplizierter zu reinigen und/oder zu reparieren.

Zur Steigerung des Anlagendurchsatzes besteht zudem das Bestreben, möglichst große Bauplattformen vorzusehen. Für eine effiziente Beschichtung solcher Bauplattformen bedarf es allerdings auch eines langen Beschichters, der in optimaler Weise von Bauplattform-Längsseite zu Bauplattform-Längsseite verfahrbar ist und dabei die gesamte Länge der Bauplattform überspannt. Ein solcher Beschichter ist sehr schwer, insbesondere wenn in den mitfahrenden Vorratsbehälter eine Verteilvorrichtung wie z.B. eine Verteilerschnecke integriert ist.

Es ist eine Aufgabe der Erfindung, einen leistungsstarken Beschichter bereitzustellen, der zudem einfach zu handhaben ist.

Hierzu stellt die Erfindung einen Beschichter zum gleichmäßigen Aufbringen eines Partikelmaterials über das Baufeld hin bereit, der z.B. in einer Anlage zum Lasersintern oder zum selektiven Bedrucken der zu verfestigenden Teilbereiche der Schichten aus Partikelmaterial eingesetzt werden kann.

Der erfindungsgemäße Beschichter hat einen langgestreckten, d.h. in Draufsicht länglich ausgebildeten, Dosierschacht und einen bevorzugt ebenfalls langgestreckten Vorlagebehälter, der oberhalb des Dosierschachts angeordnet ist und aus dem das Partikelmaterial während der Beschichterfahrt in den Dosierbehälter zugeführt wird, aus dem das Partikelmaterial sodann aus dem Längsschlitz des Dosierbehälters an dessen Unterseite auf das Baufeld dosiert ausgegeben wird. Der Dosierschacht und/oder der Vorlagebehälter können z.B. trichterförmig ausgebildet sein. Der Dosierschacht und der Vorlagebehälter werden gemeinsam über das Baufeld, z.B. eine Bauplattform, hinweg bewegt. Hierzu können Dosierschacht und Vorlagebehälter z.B. an einem horizontal über das Baufeld hin verfahrbaren Beschichter-Träger angebracht sein. Der Vorlagebehälter ist oberhalb des Dosierschachts angeordnet, um den Dosierschacht während jeder Beschichtungsfahrt mit Baumaterial zu versorgen. Der Vorlagebehälter selbst kann von Zeit zu Zeit (z.B. nach einer vorbestimmten Anzahl von Beschichtungsfahrten oder nach Absinken des Baumaterial-Füllstands in dem Vorlagebehälter auf einen vorbestimmten Füllstand) z.B. aus einem stationären Vorratsbehälter oder einem stationären Mischer befüllt werden, wozu der Beschichter in eine Beschickungsposition gefahren wird.

Der Dosierschacht hat eine obere Zuführöffnung, z.B. eine langgestreckte Zuführöffnung an der Oberseite des Dosierschachts, durch welche dem Dosierschacht das Baumaterial aus dem Vorlagebehälter zugeführt wird. Zur Ausbildung der Zuführöffnung kann der Dosierschacht an seiner Oberseite oder beispielsweise an seinem oberen Seitenrand offen sein. Der Vorlagebehälter hat an seiner Unterseite oder beispielsweise an seinem unteren Seitenrand eine z.B. langgestreckte Ausgabeöffnung, über die das Baumaterial durch die Zuführöffnung des Dosierschachts hindurch in den Dosierbehälter eingespeist werden kann. Die Ausgabeöffnung des Vorlagebehälters kann z.B. in die Zuführöffnung des Dosierschachts eintauchen.

Erfindungsgemäß sind der Dosierschacht und der Vorlagebehälter relativ zueinander in eine Reinigungsposition verschwenkbar. D.h., der Dosierschacht kann von dem Vorlagebehälter weggeschwenkt werden und/oder der Vorlagebehälter kann von dem Dosierschacht weggeschwenkt werden. Vorzugsweise ist hierzu der Vorlagebehälter an dem Beschichter um eine untere Schwenkachse verschwenkbar angeschlossen, so dass der Vorlagebehälter aus einer Betriebsposition heraus, in welcher der Vorlagebehälter oberhalb des Dosierschachts angeordnet ist und die Ausgabeöffnung des Vorlagebehälters mit der Zuführöffnung des Dosierschachts in Verbindung steht, in eine Reinigungsposition verschwenkbar ist. In dieser Reinigungsposition liegen die Ausgabeöffnung des Vorlagebehälters wie auch die Zuführöffnung des Dosierschachts und dessen Innenraum zur Reinigung frei.

Aufgrund der relativen Verschwenkbarkeit zwischen Dosierschacht und mitfahrendem Vorratsbehälter ist die Zugänglichkeit des Dosierschachts und des Vorratbehälters für eine Reinigung und/oder Reparatur derselben verbessert. Z.B. kann für eine Reinigung und/oder Reparatur des Beschichters zunächst der Baubehälter bzw. die Baubox aus der Anlage heraus gefahren werden, um in der Anlagenmitte Platz zu schaffen, woraufhin der Beschichter in die Mitte der Anlage bzw. des Baufeldes gefahren wird. Im Anschluss daran kann die Anlage betreten und z.B. der Vorlagebehälter von dem Dosierschacht/Träger weggeschwenkt werden, um einzelne Stellen/Teile des Beschichters zu reinigen/reparieren, wie z.B. die Zuführöffnung des Dosierschachts, die Ausgabeöffnung des Vorlagebehälters, die Innenwände des Vorlagebehälters und Dosierschachts oder ein in dem Vorlagebehälter aufgenommenes Verteilelement. Insbesondere kann der Beschichter aufgrund der verschwenkbaren Ausbildung von z.B. dem Vorlagebehälter groß dimensioniert werden, d.h. mit einem sehr langen und in der Folge sehr schweren Vorlagebehälter bzw. Dosierschacht versehen sein, wobei er dennoch von einer einzelnen Person problemlos gereinigt und/oder repariert werden kann. Daher wird z.B. keine Hebevorrichtung oder dergleichen benötigt, um den Vorlagebehälter nach dessen Demontage nach oben anzuheben und von dem Dosierschacht wegzubewegen.

Zum Beispiel verläuft die Schwenkachse, um die der Vorlagebehälter und/oder der Dosierschacht geschwenkt werden können, parallel zu der Längsachse des Dosierschachts und des Vorlagebehälters, z.B. zwischen Vorlagebehälter und Dosierschacht oder im Abstand unterhalb des Vorlagebehälters. Gemäß einer alternativen Ausführungsform kann die Schwenkachse aber z.B. auch vertikal verlaufen, so dass der Vorlagebehälter und/oder der Dosierschacht in einer horizontalen Ebene relativ zueinander verschwenkbar sind.

Der Dosierschacht und der Vorlagebehälter sind an einem Beschichter-Träger montiert. Der Dosierschacht und/oder der Vorlagebehälter können über jeweils mindestens ein Gelenk schwenkbar mit dem Träger verbunden sein.

Gemäß einer vorteilhaften Ausführungsform ist der Vorlagebehälter schwenkbar ausgeführt. Z.B. ist lediglich oder Vorlagebehälter schwenkbar ausgeführt. Dabei wird es bevorzugt, dass der Vorlagebehälter von dem Dosierschacht und dem Beschichter-Träger weggeschwenkt werden kann und hierzu der Vorlagebehälter an den Beschichter-Träger angelenkt ist, so dass der vergleichsweise empfindliche, weniger stabile Dosierschacht weder belastet noch verschwenkt wird. Z.B. ist der Vorlagebehälter an seinen Längsenden jeweils gelenkig mit dem Beschichter-Träger verbunden. Dazu kann sich z.B. von den Längsenden des Beschichter-Trägers aus jeweils ein Befestigungsarm erstrecken, an dem die Stirn- bzw. Rückseite des Vorlagebehälters befestigt ist.

Um die relative Schwenkbewegung zwischen Dosierschacht und Vorlagebehälter freizugeben bzw. zu sperren, weist der Beschichter vorteilhaft eine Verriegelungsvorrichtung auf. Die Verriegelungsvorrichtung kann z.B. zwischen Beschichter-Träger und Vorlagebehälter vorgesehen sein. Insbesondere kann die Verriegelungsvorrichtung einen Greifarm aufweisen, dessen eines Ende an dem Beschichter-Träger bewegbar angebracht ist und dessen anderes Ende in eine an dem Vorlagebehälter vorgesehene Eingreiföffnung eingreifen kann. Das an dem Beschichter-Träger angebrachte Greifarm-Ende kann z.B. mit einem Hebel verbunden sein, der an dem Beschichter-Träger schwenkbar befestigt ist und durch dessen Schwenkbewegung das vorlagenbehälterseitige Greifarm-Ende in Richtung zu der Eingreiföffnung bzw. von dieser weg bewegt werden kann.

In dem Vorlagebehälter kann eine in Vorlagebehälter-Längsrichtung verlaufende, bevorzugt angetriebene Verteilvorrichtung wie z.B. eine Verteilerschnecke angeordnet sein, mit der dem Vorlagebehälter zugeführtes Baumaterial in Vorlagebehälter-Längsrichtung verteilt werden kann. Das Baumaterial kann daher lokal in den Vorlagebehälter eingefüllt werden, d.h. es ist nicht erforderlich, das Baumaterial bereits bei der Übergabe aus einem stationären Mischer oder einem stationären Vorratsbehälter über die Beschichterlänge hinweg zu verteilen. Die Verteilvorrichtung ist dabei zusammen mit dem Vorlagebehälter verschwenkbar ausgebildet, z.B. an ihren Längsenden in dem Vorlagebehälter abgestützt, so dass die Verteilvorrichtung - wenn der Vorlagebehälter z.B. um eine Achse verschwenkbar ist, die parallel zu der Längsachse des Vorlagebehälters verläuft - für eine Reinigung oder einen Austausch gut zugänglich ist. Die Verteilvorrichtung kann z.B. einen eigenen Antrieb haben oder z.B. mittels eines Getriebeelements antreibbar sein, das für das Wegschwenken des Vorlagebehälters von seinem Antrieb entkuppelbar ist. Die lokale Übergabe des Baumaterials von einem stationären Mischer oder einem stationären Vorratsbehälter in den Vorlagebehälter kann z.B. über einen Zuführtrichter erfolgen, der an der Vorlagebehälter-Oberseite befestigt ist, z.B. angeschraubt ist. Der Zuführtrichter und der Mischer bzw. Vorratsbehälter können daher wesentlich kürzer ausfallen als der Vorlagebehälter.

An der Innenwand des Dosierschachts kann z.B. eine Partikelmaterial-Umlenkplatte angebracht sein, welche in geringem Abstand oberhalb des Längsschlitzes und parallel zu diesem angeordnet ist und einen Umlenkspalt mit der Wand des Dosierschachts zwischen dessen Innenraum und dem Längsschlitz ausbildet. An der Unterseite des Dosierschachts kann z.B. ein Streichelement, wie z.B. eine Streichleiste oder -schiene, angebracht sein zum Nivellieren und Verdichten des ausgegebenen Baumaterials. An dem Beschichter-Träger kann z.B. eine Schwingungserzeugungsvorrichtung angebracht sein, mit der eine Seitenwand des Dosierschachts und/oder der Vorlagebehälter in Schwingung versetzbar ist, um die Fließfähigkeit des Baumaterials zu beeinflussen. An dem Vorlagebehälter kann z.B. ein Füllstandssensor zum Detektieren des Baumaterial-Füllstands in dem Vorlagebehälter angebracht ist. Durch die schwenkbare Ausführung von Vorlagebehälter und/oder Dosierschacht sind all diese Komponenten besser zugänglich und können daher einfacher gereinigt und/oder repariert/ausgetauscht werden.

Die Erfindung wird im Folgenden anhand verschiedener Ausführungsformen mit Bezugnahme auf die Zeichnung näher erläutert. In der Zeichnung zeigen:
Figur 1 eine Perspektivansicht auf die vordere Stirnseite einer erfindungsgemäßen **Anlage 100** zum schichtweisen Aufbau eines Formköpers gemäß einer ersten Ausführungsform der Erfindung,
Figur 2 eine zweite Perspektivansicht der erfindungsgemäßen Anlage aus Fig. 1,
Figur 3 eine dritte Perspektivansicht der Anlage aus Fig. 1, wobei das Gehäuse der Anlage weggelassen ist,
Figur 4 eine vierte Perspektivansicht der Anlage aus Fig. 1, wobei das Gehäuse der Anlage weggelassen ist,
Figur 5 eine fünfte Perspektivansicht der Anlage aus Fig. 1, wobei das Gehäuse der Anlage weggelassen ist,
Figur 6 eine Perspektivansicht einer erfindungsgemäßen Anlage zum schichtweisen Aufbau eines Formköpers gemäß einer zweiten Ausführungsform der Erfindung,
Figur 7 eine Perspektivansicht auf die vordere Stirnseite und eine benachbarte Seitenwand einer erfindungsgemäßen **Baubox 200,**
Figur 8 die Ansicht aus Figur 7, wobei die Verkleidungswand an der vorderen Stirnseite weggelassen ist, um den Fahrantrieb und den Hubantrieb der Baubox zu zeigen,
Figur 9 eine Perspektivansicht auf die vordere Stirnseite der Baubox aus den Figuren 7 und 8, wobei die Baubox auf dem Schienensystem der Anlage angeordnet ist und wobei die Baubox in die Entpackungsposition gefahren ist,
Figur 10 eine Perspektivansicht auf die vordere Stirnseite sowie eine weitere Seitenwand der Baubox, welche der in Figur 7 gezeigten Seitenwand abgewandt ist,
Figur 11 eine Perspektivansicht des Anlagenrahmens und der daran angebrachten Komponenten des Bauboxfixierungssystems,
Figur 12 eine Frontalansicht auf die vordere Stirnseite der Baubox, wobei sich die Baubox in der Bauposition befindet und an dem Anlagenrahmen fixiert ist,
Figur 13 eine Perspektivansicht auf die Oberseite der Baubox bzw. auf die darin aufgenommene Bauplattform, wobei sich die Baubox in der Bauposition befindet,
Figur 14 eine Detailansicht der anlagenfesten Baufeldabdeckung, welche sich unter Ausbildung einer Labyrinthdichtung entlang einer Seitenwand der Baubox erstreckt,
Figur 15 eine Detailansicht der zwischen der anlagenfesten Baufeldabdeckung und der Baubox ausgebildeten Labyrinthdichtung,
die Figuren 16 und 17 jeweils eine Perspektivansicht einer erfindungsgemäßen **Mischvorrichtung 300,**
Figur 18 eine Perspektivansicht auf die vordere Stirnseite eines erfindungsgemäßen **Beschichters 400,** wobei der Beschichter in seiner Betriebsposition ist, d.h. der Dosierschacht und der Vorlagebehälter des Beschichters sind jeweils an dem Beschichter-Träger befestigt,
Figur 19 eine Perspektivansicht des Beschichters aus Fig. 18 von vorne, wobei der Vorlagebehälter des Beschichters von dem Beschichter-Träger weg in eine Reinigungsposition geschwenkt ist, um z.B. die Verteilerschnecke des Vorlagebehälters zu reinigen,
Figur 20 eine Perspektivansicht des Beschichters aus Fig. 18 von hinten, wobei der Vorlagebehälter des Beschichters zusammen mit dem Zuführtrichter in eine Reinigungsposition geschwenkt ist, um z.B. die Zuführöffnung des Dosierschachts zu reinigen,
Figur 21 eine Perspektivansicht des Beschichters aus Fig. 18, wobei der Beschichter in die Anlage eingebaut ist und in seiner Betriebsposition ist und wobei die vordere Stirnwand der einzelnen Beschichter-Komponenten weggelassen ist,
Figur 22 eine Perspektivansicht einer erfindungsgemäßen **Druckvorrichtung 500,** welche einen Druckkopfträger und einen daran aufgehängten Druckkopf aufweist,
Figur 23 eine Detailansicht des Druckkopfes aus Fig. 22 und dessen Aufhängung an dem Druckkopfträger,
Figur 23a eine schematische Unteransicht des Druckkopfkopfes, um die Anordnung der Druckkopfdüsen zu veranschaulichen,
Figur 24 eine Perspektivansicht einer erfindungsgemäßen **Beschichter-Reinigungsvorrichtung 600,**
Figur 25 eine Perspektivansicht der Beschichter-Reinigungsvorrichtung aus Figur 24 und des Beschichters,
Figur 26 eine Perspektivansicht auf eine Seitenwand des Anlagengehäuses,
Figur 27 eine Perspektivansicht von dem horizontal verfahrbaren Druckkopf in seiner Ruhe- bzw. Parkposition und von einer benachbart zu dem Druckkopf angeordneten erfindungsgemäßen **Druckkopf-Reinigungsvorrichtung 700,** welche gemäß der gezeigten Ausführungsform zwei seitlich nebeneinander angeordnete Wischlippen aufweist,
Figur 28 eine Perspektivansicht der Druckkopf-Reinigungsvorrichtung aus Figur 27, wobei sich die zwei Wischlippen in der Druckkopf-Reinigungsposition befinden,
Figur 29 eine Perspektivansicht der Druckkopf-Reinigungsvorrichtung aus Figur 27, wobei sich die zwei Wischlippen in der Wischlippen-Regenerationsposition befinden, und die Figuren 30a bis 30f verschiedene Ausführungsformen der erfindungsgemäßen Druckkopf-Reinigungsvorrichtung.

### Anlage 100

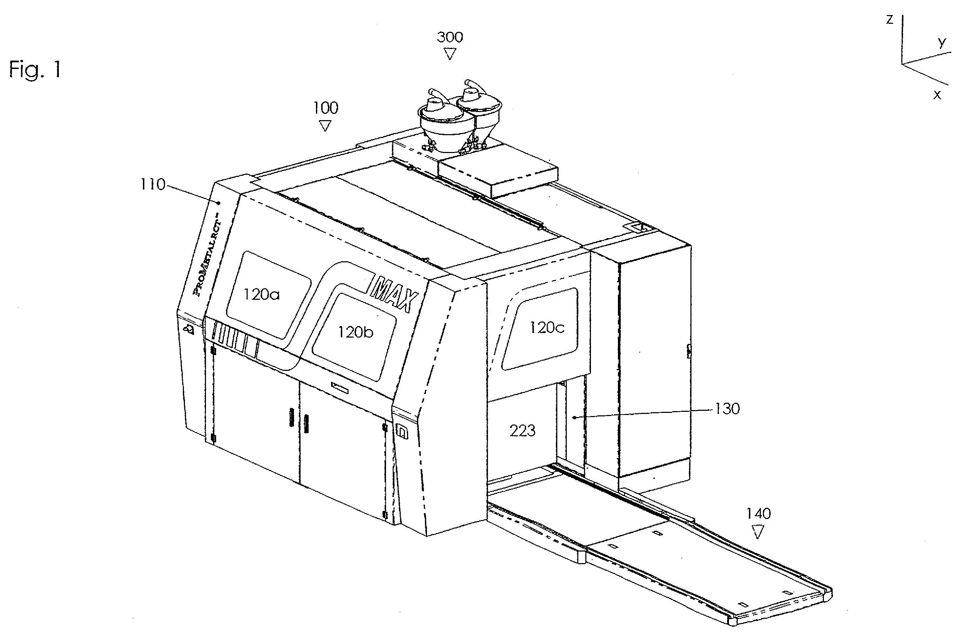

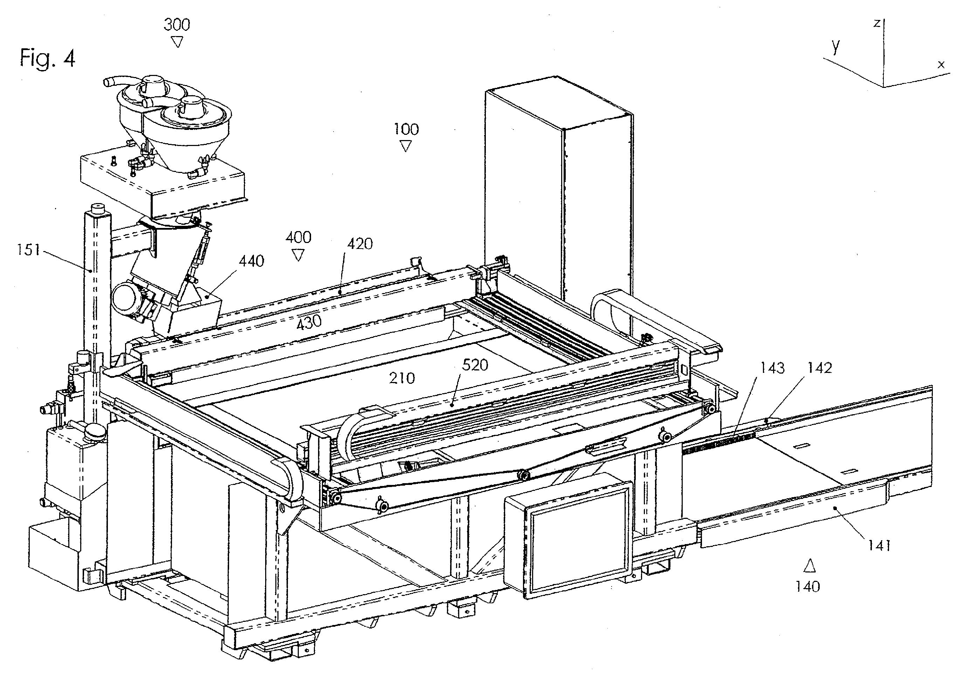

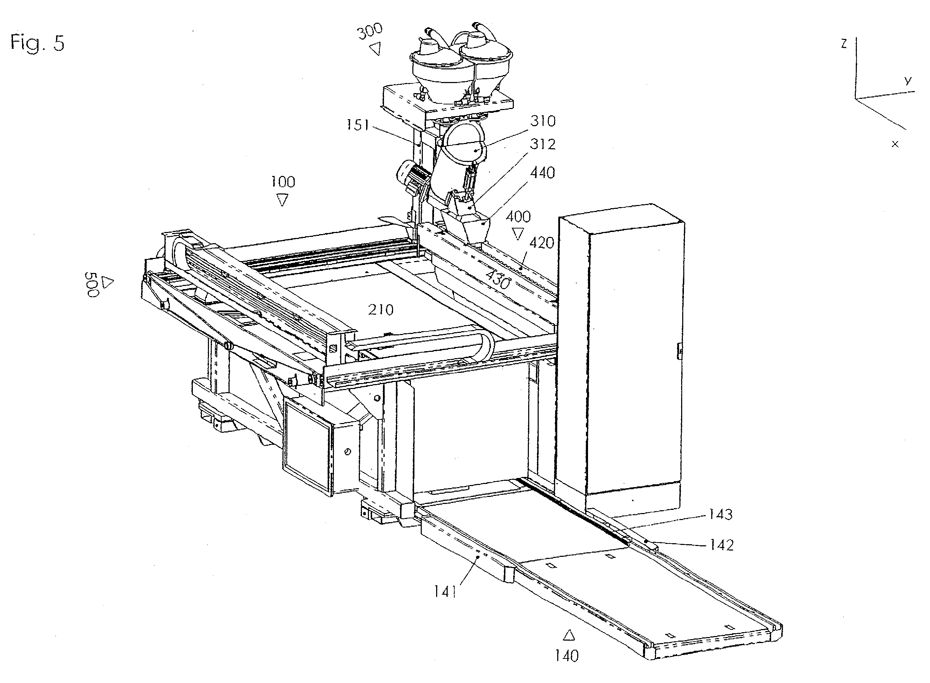

Die **Figuren 1 bis 5** zeigen eine Rapid-Prototyping-Anlage 100 gemäß einer ersten Ausführungsform der Erfindung, welche zum selektiven Verfestigen der Baumaterial-Schichten mit einer Druckvorrichtung ausgestattet ist. An dieser Stelle wird angemerkt, dass die meisten Komponenten der Anlage 100 auch auf andere Rapid-Prototyping-Anlagen anwendbar sind. Zum Beispiel können die Baubox 200, die Mischvorrichtung 300, der Beschichter 400 und die Beschichter-Reinigungsvorrichtung 600 problemlos, ggf. mit geringfügigen Modifikationen, in einer Anlage zum Lasersintern eingesetzt werden. Mit anderen Worten kann die Anlage 100 z.B. zu einer Laser-Sinter-Anlage umgerüstet werden, indem der Druckkopf 500 durch eine Strahlungsquelle bzw. einen Laser ersetzt wird.

Mit der Anlage 100 kann ein Formkörper, z.B. eine Gussform, unmittelbar aus zuvor generierten CAD-Daten hergestellt werden durch Ausbilden von übereinander liegenden Baumaterialschichten und durch selektives Verfestigen von Teilbereichen der jeweiligen Baumaterialschicht vor dem Ausbilden der nächsten Schicht.

Der Formkörper bzw. die Baumaterialschichten werden auf einer Bauplattform 210 einer Baubox 200 aufgebaut. Die Bauplattform 210 ist höhenverstellbar und kann vor dem Auftragen einer neuen Baumaterialschicht um eine Schichtdicke abgesenkt werden, so dass die Arbeitsebene (= oberste Baumaterialschicht) stets auf dem selbem Niveau ist.

Das Baumaterial weist Partikelmaterial auf. Als Partikelmaterial kann zum Beispiel Sand eingesetzt werden, insbesondere ein Sand wie er üblicherweise in der Gießereitechnik verwendet wird. Das Aufbringen der jeweiligen Baumaterialschicht erfolgt mit einem Beschichter 400, der horizontal über die Bauplattform 210 hin verfahrbar ist. Der Beschichter 400 wird über eine Mischvorrichtung 300 mit Baumaterial gespeist.

Zur selektiven Verfestigung der jeweiligen Baumaterialschicht wird eine Druckvorrichtung 500 mit einem horizontal verfahrbaren Druckkopf 510 eingesetzt, mit dem ein geeignetes Bindemittel auf die zu verfestigende Schicht aufgegeben/aufgedruckt werden kann, wozu der Druckkopf 510 mäanderförmig über die Baumaterialschicht hinweg gefahren wird. Das Partikelmaterial "verklebt" bzw. verfestigt das Partikelmaterial selektiv. Als Bindemittel kann z.B. ein Harz eingesetzt werden, z.B. Furanharz. Zudem ist es möglich, ein Mehrkomponentenbindemittel zu verwenden, wobei eine erste Bindemittel-Komponente (z.B. das Harz) über den Druckkopf 510 aufgedruckt wird, und wobei eine zweite Bindemittel-Komponente (z.B. ein Aktivator oder Härter) mit dem Partikelmaterial vermengt ist. Das durch den Drucker selektiv aufgedruckte Harz reagiert mit dem in der obersten Sandschicht vorliegenden Härter, wodurch das Harz aushärtet und dadurch einzelne Sandkörner miteinander verbindet/verklebt. Zudem wird durch das aushärtende Harz der zu verfestigende Abschnitt der obersten Schicht mit dem zu verfestigenden Abschnitt der unmittelbar unter der oberen Schicht angeordneten Schicht verbunden.

Vereinfacht wiedergegeben kann ein Formteil demnach z.B. wie folgt ausgebildet werden:
1. Bereitstellen einer Baumaterialmischung, enthaltend Formsand und Härter, unter Verwendung des Mischers 300,
2. Chargenweiser/Schichtweiser Auftrag des Baumaterials auf die Bauplattform 210 des Baubehälters 200 mit Hilfe des Beschichters 400,
3. Eindosieren von Harz in die oberste Baumaterialschicht unter Verwendung der Druckvorrichtung 500
4. und Wiederholen der Schritte 2 und 3, bis der Formkörper fertiggestellt ist.

Der Beschichter 400 und die Druckvorrichtung 500 sind in einem Gehäuse 110 untergebracht, in dem der oben beschriebene Bauprozess abläuft. Das Gehäuse 110 weist Fenster 120a-120d auf zum Beobachten des Prozessablaufs. Ferner weist das Gehäuse 110 eine stirnseitige Baubox-Einfahr/Ausfahr-Öffnung 130 auf, durch welche die Baubox 200 in das Gehäuse 110 hinein und aus diesem heraus gefahren werden kann. Wie aus Figur 1 ersichtlich ist, wird die Baubox-Einfahr/AusfahrÖffnung 130 durch eine hintere Stirnwand/Verkleidungswand 223 der Baubox 200 geschlossen, wenn die Baubox 200 in der Bauposition fixiert ist. Mit anderen Worten bildet die Baubox 200 in der Bauposition einen Teil der Anlagenverkleidung, so dass keine zusätzliche Tür oder Schutzvorrichtung notwendig ist.

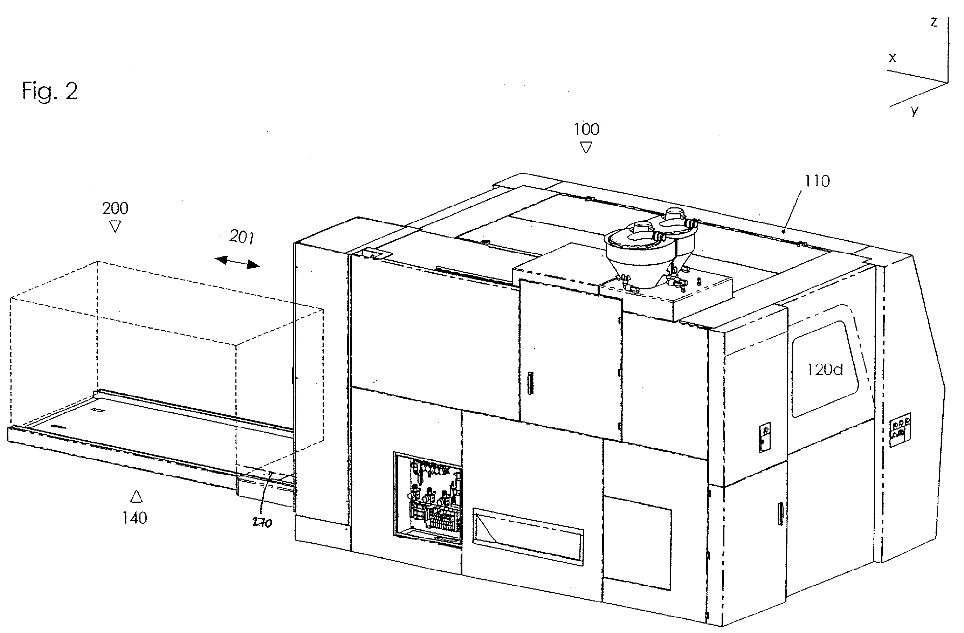

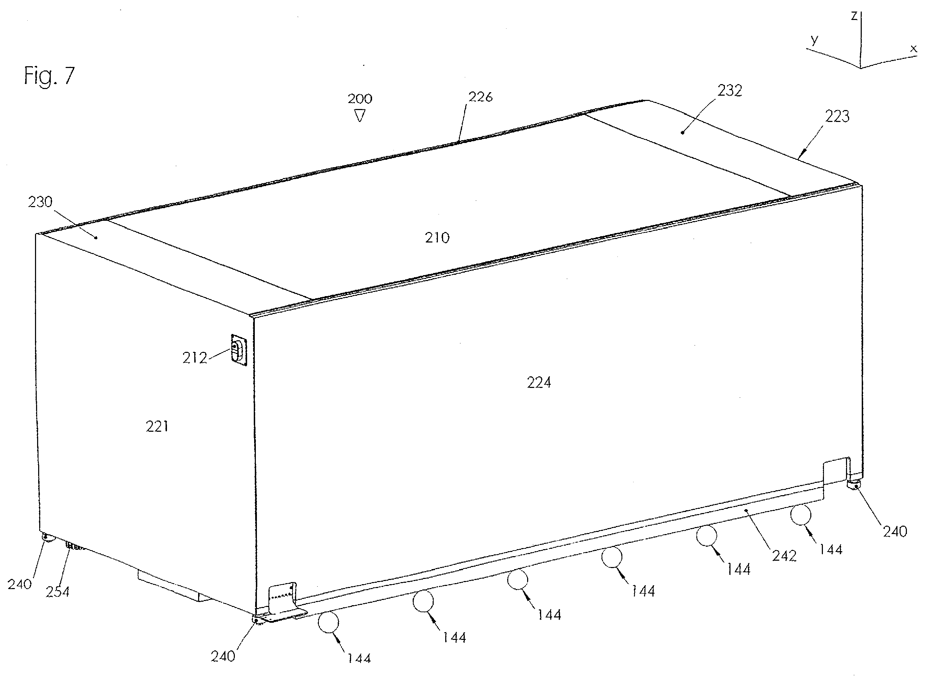

Nach Fertigstellung des Formköpers wird die Baubox 200 aus dem Gehäuse 110 heraus in die in Figur 2 durch gestrichelte Linien angedeutete Entpackungsposition gefahren. D.h., die Baubox 200 ist in Richtung des Pfeils 201 zwischen einer Bauposition und einer Entpackungsposition verfahrbar (siehe Figur 2). In der Entpackungsposition kann der fertige Formkörper ausgepackt und freigelegt werden, z.B. durch Anheben bzw. nach oben Fahren der Bauplattform 210 und durch Wegblasen oder Absaugen des losen, nicht verfestigten Formsands. Das Anheben bzw. Absenken der Bauplattform 210 in der Entpackungsposition kann automatisiert erfolgen oder manuell über einen Druckknopf 212 gesteuert werden (siehe Figur 7). Anschließend wird der Formkörper z.B. per Hand entnommen und ggf. einer abschließenden Reinigung unterzogen, wie z.B. einem Abbürsten. Daraufhin ist die Baubox 200 frei und kann erneut in das Gehäuse 110 bzw. in ihre Bauposition gefahren werden, so dass der nächste Baujob ausgeführt werden kann.

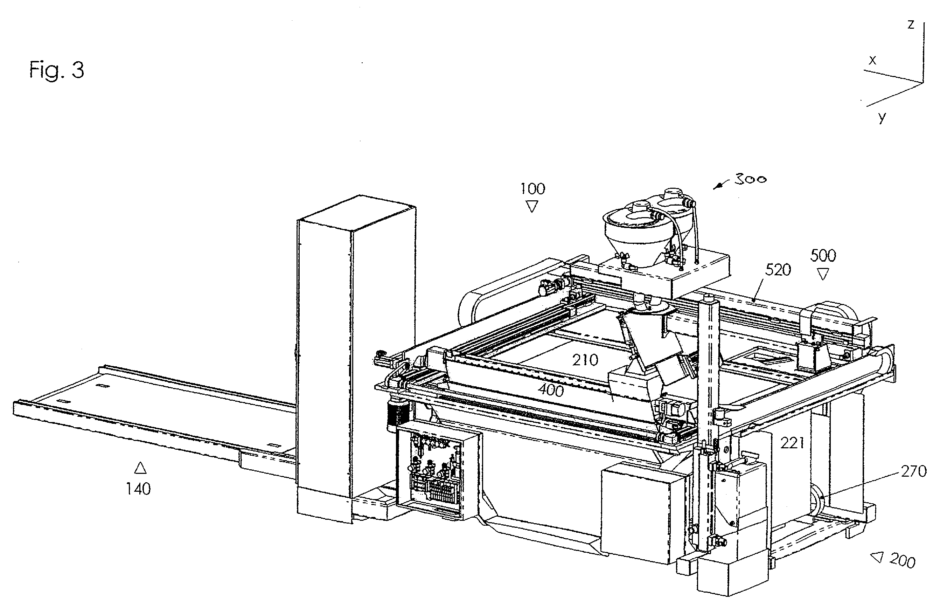

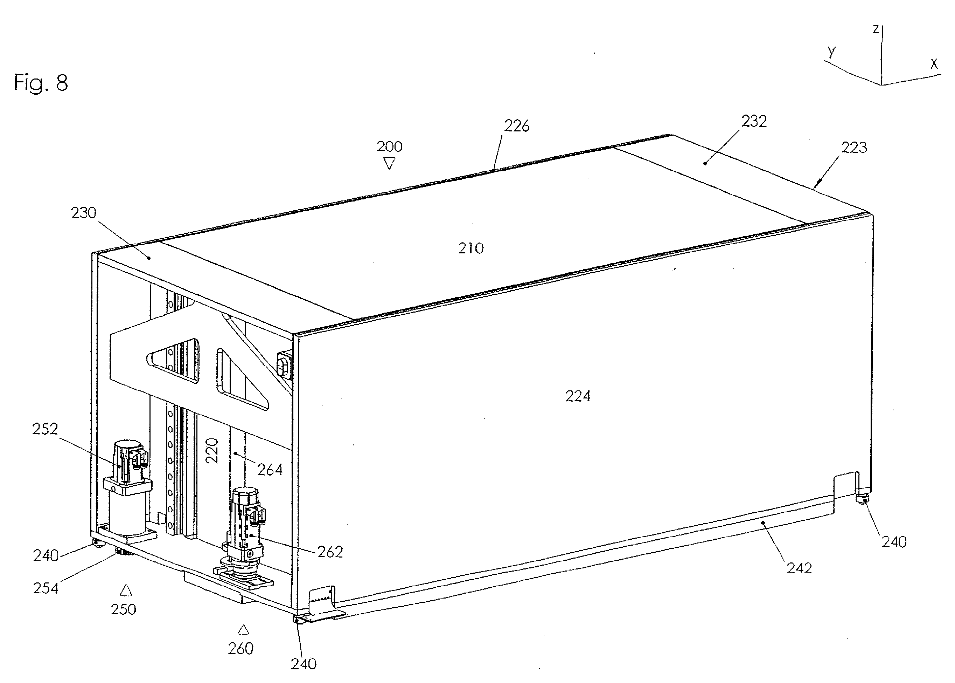

Die Baubox 200 wird somit ständig zwischen der Bauposition und der Entpackungsposition hin- und hergefahren, wozu die Baubox 200 auf einem Schienensystem 140 angeordnet ist (sog. einfacher Shuttle-Betrieb). D.h., die in den Figuren 1 bis 5 gezeigte Anlage 100 weist genau eine Baubox 200 auf. Die Baubox 200 ist somit nicht als Wechselbehälter ausgebildet, sondern vielmehr anlagenfest ausgebildet; insbesondere ist die Baubox 200 selbstfahrend ausgebildet, wozu sie einen bauboxseitigen, d.h. an der Baubox angebrachten, Fahrantrieb 250 mit eigenem Fahrmotor 252 aufweist (siehe Figur 8 sowie die unten stehende Beschreibung der Baubox), der über eine in das Gehäuse führende Schleppkette bzw. Schleppkabel 270 (siehe Figuren 2 und 3) mit Strom versorgt wird; ferner weist die Baubox 200 einen bauboxseitigen Hubantrieb 260 mit eigenem Hubmotor 262 auf, welcher ebenfalls über die Schleppkette 270 mit Strom versorgt wird (siehe hierzu Figur 8 sowie die unten stehende Beschreibung der Baubox).

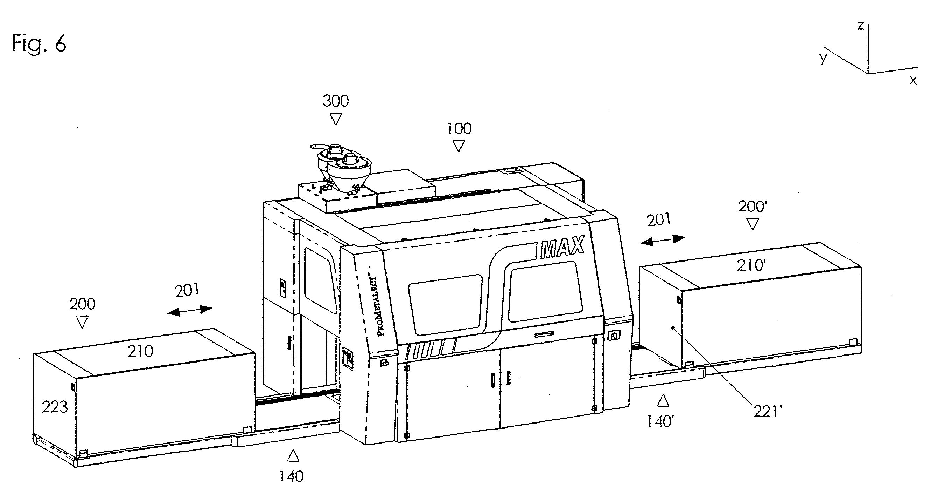

Wie in Figur 6 gezeigt ist, kann die Anlage 100 gemäß einer anderen Ausführungsform der Erfindung aber auch eine zweite Baubox 200' aufweisen, die entlang eines zweiten Schienensystems 140 (oder eines gemeinsamen Schienensystems) und durch eine zweite stirnseitige Baubox-Einfahr/AusfahrÖffnung in dem Gehäuse 110, welche der ersten Baubox-Einfahr/Ausfahr-Öffnung abgewandt ist, entlang des Pfeils 201 zwischen der gemeinsamen Bauposition und einer zweiten Entpackungsposition hin- und herfahrbar ist. Folglich kann nach der Fertigstellung eines ersten Formkörpers unter Verwendung der ersten Baubox 200, die erste Baubox 200 in die ihr zugeordnete erste Entpackungsposition gefahren werden, um den Formkörper auszupacken. Sobald die Anlage 100 frei ist, d.h. die erste Baubox 200 aus der Anlage heraus gefahren ist, kann die zweite Baubox 200' in die Bauposition gefahren und fixiert werden, um einen zweiten Formkörper unter Verwendung der zweiten Baubox 200' herzustellen (sog. doppelter Shuttle-Betrieb). Mit dem doppelten Shuttle-Betrieb kann die Anlage 100 quasi-kontinuierlich betrieben werden, wohingegen mit dem einfachen Shuttle-System lediglich ein Batchbetrieb möglich ist. Die Baubox 200' ist wie die Baubox 200 anlagenfest und selbstfahrend ausgebildet. Im Übrigen entspricht die in Figur 6 gezeigte Anlage 100 der in den Figuren 1 bis 5 gezeigten Anlage 100.

Die Figuren 3 bis 5 zeigen die Anlage 100 ohne das Gehäuse 110. Die Baubox 200 befindet sich in der Bauposition, und die Bauplattform 210 ist nach oben gefahren. Der Druckkopf 510 der Druckvorrichtung 500 und der Beschichter 400 befinden sich jeweils in ihrer Parkposition. In der jeweiligen Parkposition sind Beschichter 400 und Druckvorrichtung 500 an gegenüberliegenden Seiten der Bauplattform 210 angeordnet, insbesondere sind der Druckkopfträger 520 und der Beschichter-Träger 430 parallel zueinander sowie parallel zu den Längsseiten der Bauplattform 210 angeordnet. Die beiden Träger 430 und 520 sind in y-Richtung über die Bauplattform 210 hin verfahrbar, d.h. in Querrichtung der Bauplattform 210 und senkrecht zu der Verfahrrichtung der Baubox 200. Ferner kann der Druckkopf 510 in x-Richtung, d.h. in Längsrichtung der Bauplattform 210, entlang des Druckkopfträgers 520 verfahren werden. In einer alternativen Ausführungsform können der Druckkopf-Träger 520 und der Beschichter-Träger 430 allerdings auch senkrecht zu der Längsachse der Bauplattform 210 angeordnet sein, d.h. an den sich gegenüberliegenden kurzen Seiten der Bauplattform 210, so dass sie in x-Richtung über die Bauplattform 210 hinweg verfahrbar sind. Die Mischvorrichtung 300 ist an einer vertikalen Säule 151 des Anlagenrahmens 150 befestigt und zwar oberhalb des Vorlagebehälters 410 und oberhalb des Zuführtrichters 440 des Beschichters 400, wobei die Ausgabeöffnung 312 des Mischers 310 in der Beschickungsposition des Beschichters 400 über dem Zuführtrichter 440 angeordnet ist, um den Vorlagebehälter 410 über den Zuführtrichter 440 mit frisch zubereitetem Baumaterial zu beschicken.

Die Anlage 100 weist ferner eine nicht gezeigte zentrale Steuereinrichtung auf, mit der der Prozessablauf und die einzelnen Komponenten wie Mischvorrichtung 300, Beschichter 400, Druckvorrichtung 500, Beschichter-Reinigungsstation 600 und Druckkopf-Reinigungsstation 700 gesteuert werden können. Im Sinne dieser Anmeldung soll dabei von dem Begriff "Steuern" auch ein "Regeln" umfasst sein, d.h. die Steuereinrichtung kann auch eine Regelungseinrichtung sein.

### Baubox 200

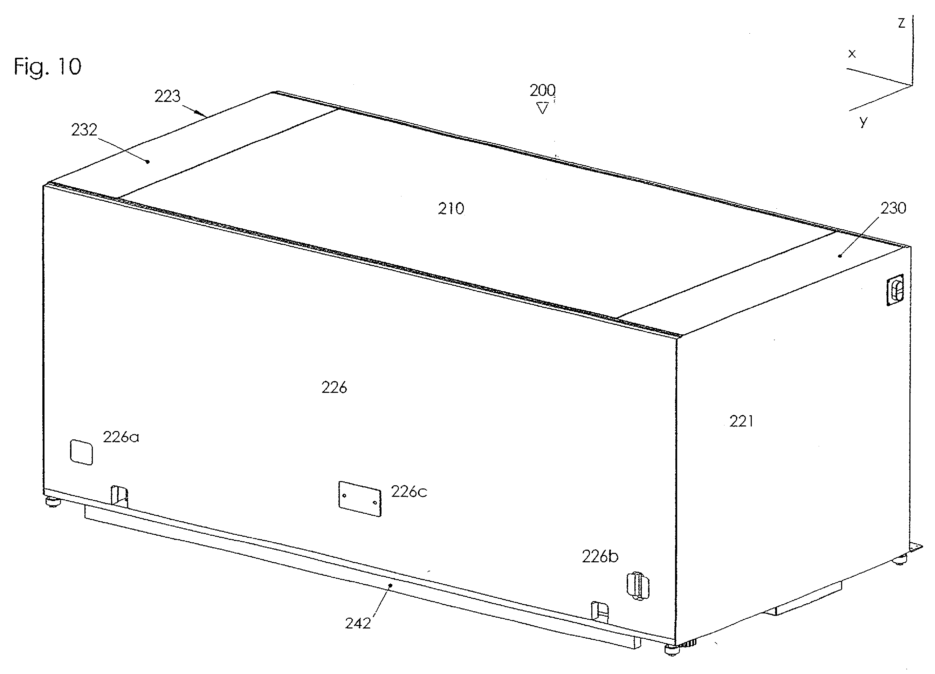

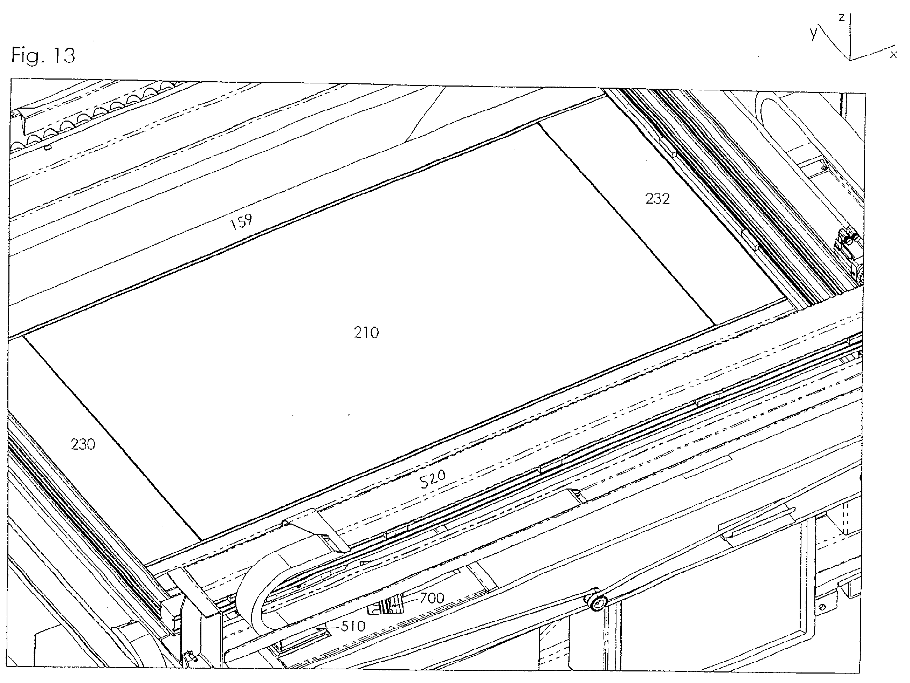

Im Folgenden werden unter Bezugnahme auf die Figuren 7 bis 15 die Baubox 200 (welche alternativ auch als Baubehälter 200 bezeichnet wird) sowie das für die Baubox 200 vorgesehene Schienensystem 140 (insbesondere Figuren 7 bis 9), das Bauboxfixierungssystem zum Ausrichten und Fixieren der Baubox 200 an dem Anlagenrahmen 150 (Figuren 10 bis 12) sowie die Baufeldabdeckung (Figuren 13 bis 15) im Detail beschrieben.

Wie in **Figur 7** gezeigt ist, weist die Baubox vier Seitenwände 221, 223, 224 und 226 auf, welche sich jeweils in vertikaler Richtung erstrecken. Die vordere Seitenwand/Stirnwand 221 dient als Verkleidungswand und bildet mit einer vertikalen Vorderwand 220 der Baubox einen Zwischenraum zur Aufnahme des Fahrantriebs 250 und des Hubantriebs 260 aus (siehe Figur 8). Auf die gleiche Weise dient die hintere Seitenwand/Stirnwand 223 als Verkleidungswand und bildet mit einer vertikalen Rückwand (nicht gezeigt) der Baubox einen zweiten Zwischenraum zur Aufnahme eines weiteren Hubantriebs (nicht gezeigt) aus. Die beiden Seitenwände 224 und 226 bilden zusammen mit der Vorderwand 220 und der Rückwand einen nach oben und unten offenen Behälter bzw. Begrenzungsrahmen aus, der im Längsschnitt rechteckig ausgebildet ist, d.h. der Begrenzungsrahmen hat zwei kurze Seitenwände sowie zwei lange Seitenwände.

Ferner weist die Baubox 200 eine erste Baufeldplatte/ Abdeckungsplatte 232 und eine zweite Baufeldplatte/ Abdeckungsplatte 230 auf, welche sich jeweils in horizontaler Richtung zwischen und senkrecht zu den beiden langen Seitenwänden 224 und 226 erstrecken und den ersten bzw. zweiten Zwischenraum nach oben abdecken. Wenn sich die Baubox 200 in der Bauposition befindet, bilden die beiden Platten 230, 232 einen der Teil der Baufeldabdeckung aus (siehe z.B. Figur 13).

Ferner weist die Baubox 200 eine Bauplattform 210 auf, die einen in vertikaler Richtung höhenverstellbaren Behälterboden ausbildet, wozu die Bauplattformunterseite auf einem Bauplattform-Träger (nicht gezeigt), z.B. einem Tragarm, abgestützt ist, der über einen Hubantrieb in vertikaler Richtung verfahrbar ist. Die Bauplattformoberseite bildet die Arbeitsfläche, auf der das herzustellende Objekt aufgebaut wird. Während des Bauprozesses, d.h. wenn sich die Baubox 200 in der Bauposition befindet, wird die Bewegung der Bauplattform durch die zentrale Steuereinrichtung gesteuert. Ferner kann die Position der Bauplattform 210 über einen an der vorderen Stirnwand 220 angebrachten Druckknopf 212 manuell eingestellt werden.

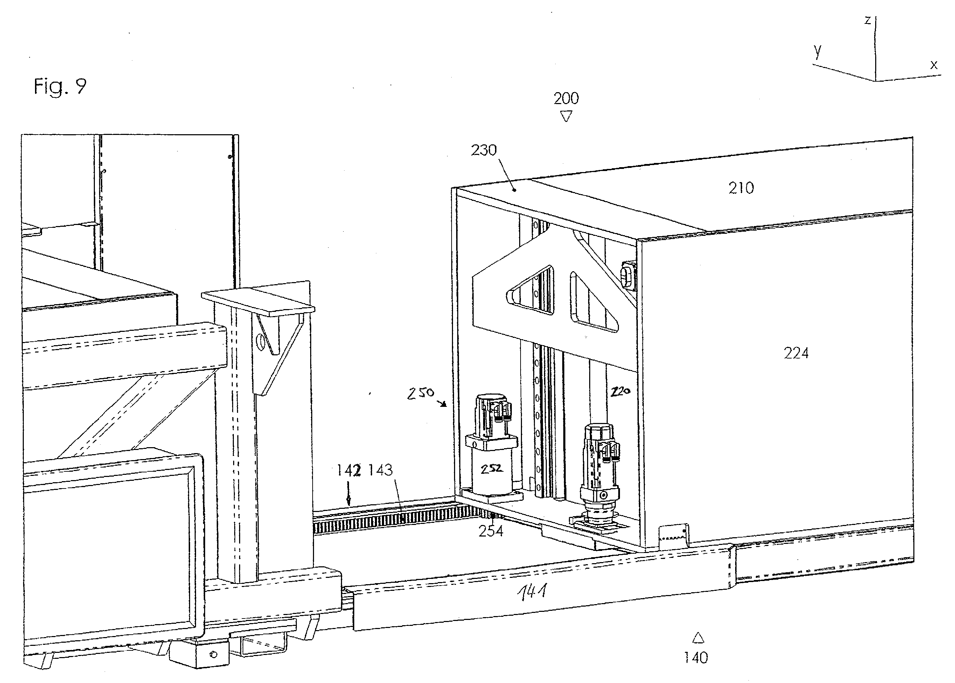

An der Unterseite der Baubox 200 sind eine Mehrzahl von seitlichen Führungsrollen 240 angebracht (gemäß dieser Ausführungsform vier), welche mit dem Schienensystem 140 zusammenwirken, um eine Zentrierung/Ausrichtung der Baubox 200 in/entlang der y-Richtung, d.h. in Baubox-Querrichtung, zu ermöglichen. Die Führungsrollen 240 können z.B. an den Innenseiten der Schienen 141, 142 abrollen. Ferner ist an der Unterseite bzw. unteren Stirnfläche/Randfläche der ersten Seitenwand 224 sowie an der Unterseite der zweiten Seitenwand 226 jeweils eine leistenförmige Gleitkufe 242 angebracht, wobei die beiden Gleitkufen 242 auf an den Innenseiten der Schienen 141, 142 angebrachten Rollen 144 stehen, welche in Figur 7 gestrichelt dargestellt sind. Ferner ist an der Bauboxunterseite ein Zahnrad 254 angebracht, das Teil des in Figur 8 gezeigten bauboxseitigen Fahrantriebs 250 ist und das in die in Figur 9 gezeigte Zahnstange 143 des Schienensystems 140 eingreift. Bei einer Drehbewegung des Zahnrads 254 wird die Baubox 200 daher in x-Richtung über die Rollen 144 hinweg bewegt.

**Figur 8** zeigt die Baubox 200 ohne die vordere Stirnwand 221. Wie aus Figur 8 ersichtlich ist, weist die Baubox 200 einen in die Baubox integrierten Baubox-Fahrantrieb 250 sowie einen in die Baubox 200 integrierten Bauplattform-Hubantrieb 260 auf. In der gezeigten Ausführungsform sind der Baubox-Fahrantrieb 250 und der Bauplattform-Hubantrieb 260 an der vorderen Stirnseite der Baubox 200 angebracht (zwischen der vorderen Stirnwand 221 und der parallel zu dieser angeordneten Vorderwand 221). Dies hat den Vorteil, dass die Schleppkette/Schleppkabel 270 für die elektrischen Anschlüsse (vgl. Figuren 2 und 3) kürzer ausgeführt werden kann und einfacher zu führen ist, da die vordere Stirnseite 220 in der Entpackungsposition der Baubox dem Gehäuse 110 der Anlage zugewandt ist. Die beiden Antriebe 250, 260 können aber auch an einer anderen Stelle positioniert sein, z.B. jeweils an der hinteren Stirnseite. Alternativ können die beiden Antriebe 250, 260 auch auf die vordere und die hintere Stirnseite verteilt sein. Gemäß einer weiteren Ausführungsform der Erfindung sind wie in Figur 8 gezeigt an der vorderen Stirnseite ein Fahrantrieb 250 sowie ein Hubantrieb 260 vorgesehen, wobei an der hinteren Stirnseite ein zusätzlicher Hubantrieb (nicht gezeigt) bereitgestellt ist, der mit dem Hubantrieb 260 synchronisiert ist. In einer weiteren Ausführungsform kann zudem auch ein zusätzlicher Fahrantrieb an der hinteren Stirnseite vorgesehen sein.

Mit dem Baubox-Fahrantrieb 250 kann die Baubox 220 zwischen der Bauposition und der Entpackungsposition im oben erwähnten einfachen Shuttle-Betrieb hin- und hergefahren werden (in x-Achsenrichtung, d.h. in Längsrichtung der Baubox). Aufgrund des eigenen Fahrantriebs 250 kann eine separate Vorrichtung zum Ein- und Ausfahren der Baubox 200 in das bzw. aus dem Gehäuse 110 entfallen. Zudem kann die Aufbauhöhe reduziert werden. Der Baubox-Fahrantrieb 250 weist einen Fahrantriebs-Motor 252 auf, der Bestandteil der Baubox 200 ist. Die Stromversorgung des Fahrantrieb-Motors 252 erfolgt über eine Schleppkette 270 (vgl. Figuren 2 und 3). Der Motor 252 treibt das bereits oben beschriebene Zahnrad 254 an, das in die Zahnstange 143 eingreift. Der Fahrantrieb 250 ist mit der zentralen Steuereinrichtung verbunden (ebenfalls über die Schleppkette 270), so dass das Verfahren der Baubox 200 automatisiert erfolgen kann.

Der Bauplattform-Hubantrieb 260 weist einen Hubantrieb-Motor 262 auf, der Bestandteil der Baubox 200 ist. Der Bauplattform-Hubantrieb 260 weist ferner eine drehbar angeordnete Schraubspindel 264 und eine Spindelmutter (nicht gezeigt) auf, welche durch Drehung der Spindel 264 entlang der Spindel nach oben bzw. unten bewegbar ist. Die Spindelmutter ist dabei mit dem Träger (nicht gezeigt) verbunden, der die Bauplattform 200 an ihrer Unterseite abstützt. Hierzu ist eine Ausnehmung in der Vorderwand 221 vorgesehen, durch die der Tragarm greift, um die Bauplattform 210 von unten abzustützen. Somit kann durch eine Drehung der Spindel die Bauplattform 210 abgesenkt bzw. angehoben werden. Ein solcher Spindeltrieb-Mechanismus ist z.B. in der DE 20 2006 010 327 U1 beschrieben, auf die insofern verwiesen wird als der Spindeltrieb, umfassend den Motor, die Spindel, die Spindelmutter und der Tragarm, betroffen ist. Jedoch ist die Baubox 200 anders als der in der DE 20 2006 010 327 U1 beschriebene Baubehälter nicht als Wechselbehälter ausgeführt, sondern vielmehr fester Bestandteil der Anlage. Die Abdichtung der Ausnehmung in der Vorderwand 221, durch die der Träger greift, kann zum Beispiel mit einem Blech erfolgen, das nach der Art eines Rollos funktioniert und sich beim Absenken der Bauplattform 210 auf die Innenseite der Vorderwand 221 anlegt, um die Tragarm-Ausnehmung zu überdecken/abzudichten. Eine solche Abdichtung ist z.B. in der DE 100 47 615 beschrieben (vgl. dort die Figuren 2 und 3), auf die insofern Bezug genommen wird. Die Stromversorgung des Motors 262 erfolgt wie die Stromversorgung des Motors 252 über die Schleppkette 270 (vgl. Figuren 2 und 3). Zudem ist auch der Bauplattform-Hubantrieb 260 mit der zentralen Steuereinrichtung verbunden (ebenfalls über die Schleppkette 270), so dass das Absenken der Bauplattform 210 während des Bauprozesses von der Steuereinrichtung gesteuert werden kann. Das Anheben der Bauplattform 210 in der Entpackungsposition der Baubox 200 kann entweder ebenfalls durch die zentrale Steuereinrichtung gesteuert werden oder manuell gesteuert werden durch Betätigen des Druckknopfes 212. Der in die Baubox 200 integrierte Hubantrieb 260 kann somit sowohl beim Bauprozess als auch beim Auspacken des fertig gestellten Formkörpers verwendet werden, so dass ein separater Motor zum Auspacken eingespart werden kann. Ferner muss die Bauplattform nach Beendigung eines Baujobs vor dem Herausfahren aus dem Gehäuse in die Entpackungsposition nicht bis zum unteren Totpunkt abgesenkt werden, wie dies bei Anlagen der Fall ist, bei denen der Hubantrieb an dem Anlagenrahmen montiert ist, sondern kann unmittelbar nach Fertigstellung des Formkörpers mit dem bauboxseitigen Fahrantrieb 250 in die Entpackungsposition gefahren werden, in der die Bauplattform 210 über den bauboxseitigen Hubantrieb 260 angehoben wird. Somit kann durch die Anordnung von Hubantrieb 260 und Fahrantrieb 250 an der Baubox 200 auch eine Zeitersparnis erzielt werden.

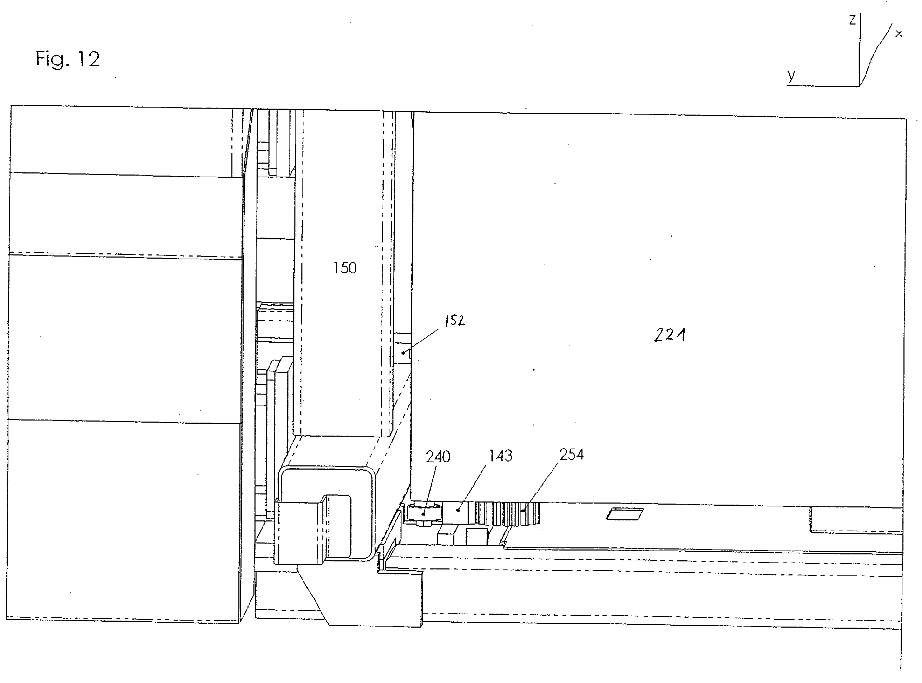

**Figur 9** zeigt die Baubox 200 auf dem für die Baubox 200 vorgesehenen Schienensystem 140. Das Schienensystem 140 weist eine erste Schiene 141 und eine zweite Schiene 142 auf, welche parallel zueinander angeordnet sind. Ferner weist das Schienensystem 140 eine Zahnstange 143 auf, die parallel zu und nahe der zweiten Schiene 142 angeordnet ist. Die Zähne der Zahnstange 143 sind der ersten Schiene 141 zugewandt. Das an der Bauboxunterseite angebrachte Zahnrad 254 greift in die Zähne der Zahnstange 143 ein, um an der Zahnstange 143 abzurollen, wenn das Zahnrad über den Motor 252 angetrieben wird. An der der zweiten Schiene 142 zugewandten Seite der Zahnstange 143 rollen die beiden Führungsrollen 240 ab, die auf der Seite der zweiten Seitenwand 226 angebracht sind (vgl. Fig. 12). Zusätzlich oder alternativ können die beiden Führungsrollen 240 aber auch an der Innenseite der zweiten Schiene 142 abrollen. Die beiden Führungsrollen 240, die auf der Seite der ersten Seitenwand 226 angebracht sind, rollen an der Innenseite der ersten Schiene 141 ab. Die Baubox ist somit durch die Führungsrollen entlang/in der y-Richtung zentriert. Zur Reduzierung der Reibung, die bei einem Verfahren der Baubox 200 auftritt, sind an den einander zugewandten Innenflächen der Schienen Rollen (nicht gezeigt) angebracht, über die die Baubox 200 mit den Gleitkufen 242 rollen kann.

Für den Bauprozess ist es wichtig, dass sich die Baubox 200 exakt in der vorbestimmten Bauposition befindet, wozu die Baubox 200 in allen Achsrichtungen zentriert und fixiert sein sollte. Die Zentrierung und Fixierung in y-Richtung erfolgt über das oben beschriebene Führungsrollensystem. In z-Richtung wird die Baubox durch ihr Eigengewicht ausreichend fixiert. Somit ist nach dem Einfahren der Baubox 200 in das Gehäuse 110 und in die Bauposition lediglich noch eine Zentrierung und Fixierung in x-Richtung erforderlich, welche durch das in den Figuren 10 bis 13 gezeigte Bauboxfixierungssystem erfolgt.

Wie in **Figur 10** gezeigt ist, weist die Baubox 200 an einer der beiden Seitenwände (gemäß dieser Ausführungsform an der zweiten Seitenwand 226) ein Anschlagplättchen 226a, eine Ausricht-Vertiefung 226b und ein Sensorzielobjekt 226c auf. Das Anschlagplättchen 226a ist in Längsrichtung hinten angeordnet, d.h. nahe der hinteren Stirnwand 223, und die Vertiefung 226b ist vorne (nahe der vorderen Stirnwand 221) angeordnet. Die Position des Anschlagplättchens 226a und die Position der Vertiefung 226b können aber auch vertauscht sein. In z-Richtung sind das Anschlagplättchen 226a und die Vertiefung 226b in dem unteren Bereich der Seitenwand angeordnet. Die Ausricht-Vertiefung 226b ist konusförmig ausgebildet. Das Sensorzielobjekt 226c ist in Längsrichtung im Wesentlichen mittig angeordnet.

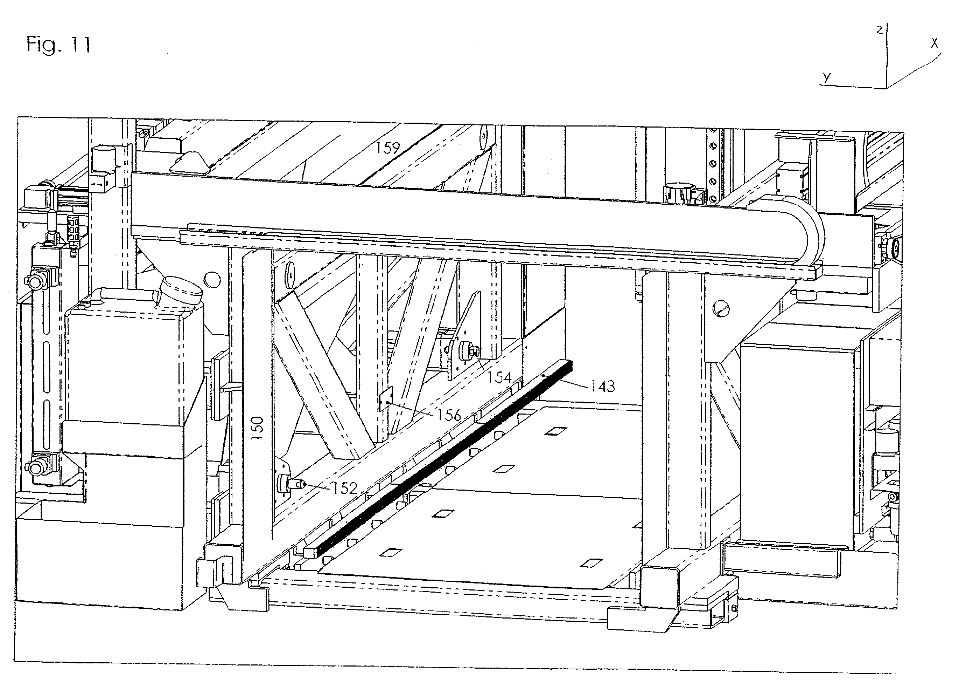

Wie in **Figur 11** gezeigt ist, sind an dem Anlagenrahmen 150 ein erstes Anpresselement/Ausricht-Element 152, welches mit der Ausricht-Vertiefung 226b zusammenwirkt, ein zweites Anpresselement/Fixierelement 154, welches mit dem Anschlagplättchen 226a zusammenwirkt, und ein Sensor 156 angebracht, welcher mit dem Sensorzielobjekt 226c zusammenwirkt. Das erstes Anpresselement 152 und das zweite Anpresselement 154 sind jeweils in y-Richtung bewegbar/verfahrbar. Die Bewegung der beiden Anpresselemente 152 und 154 wird über die zentrale Steuereinrichtung gesteuert. Das erste Anpresselement 152 weist einen Dorn auf, der entsprechend der Form der sich verjüngenden Vertiefung 226b geformt ist. Insbesondere ist der Endabschnitt des ersten Anpresselements 152 konusförmig ausgebildet. Das zweite Anpresselement 154 weist einen Bolzen mit einem flach ausgebildeten Endabschnitt auf.

Wenn die Baubox 220 in das Gehäuse 110 hinein gefahren ist, detektiert der Sensor 156, ob das Sensorzielobjekt 226c in einer vorbestimmten Position ist. Wenn das Sensorzielobjekt 226c in der vorbestimmten Position ist, gibt der Sensor ein "Baubox-in-Position-Signal" an die zentrale Steuereinrichtung aus. Die zentrale Steuereinrichtung veranlasst daraufhin ein Ausfahren der beiden Anpresselemente 152, 154, d.h. eine Bewegung in y-Richtung zu der Baubox 200 hin. Dadurch wird das erste Anpresselement 152 mit dem Konus in die Vertiefung 226c (siehe **Figur 12**) und das zweite Anpresselement 154 mit dem flachen Endabschnitt gegen das Anschlagplättchen 226a gedrückt, wodurch eine Zentrierung und Fixierung der Baubox 200 in/entlang der x-Richtung und an dem Anlagenrahmen erfolgt. Sodann kann der Bauprozess beginnen.

Da die Zentrierung in y-Richtung bereits durch die Führungsrollen 240 erfolgt, ist es ausreichend das Bauboxfixierungssystem einseitig auszubilden, d.h. es ist ausreichend, wenn nur eine der beiden Seitenwände mit der Vertiefung 226b und dem Anschlagplättchen 226a versehen ist.

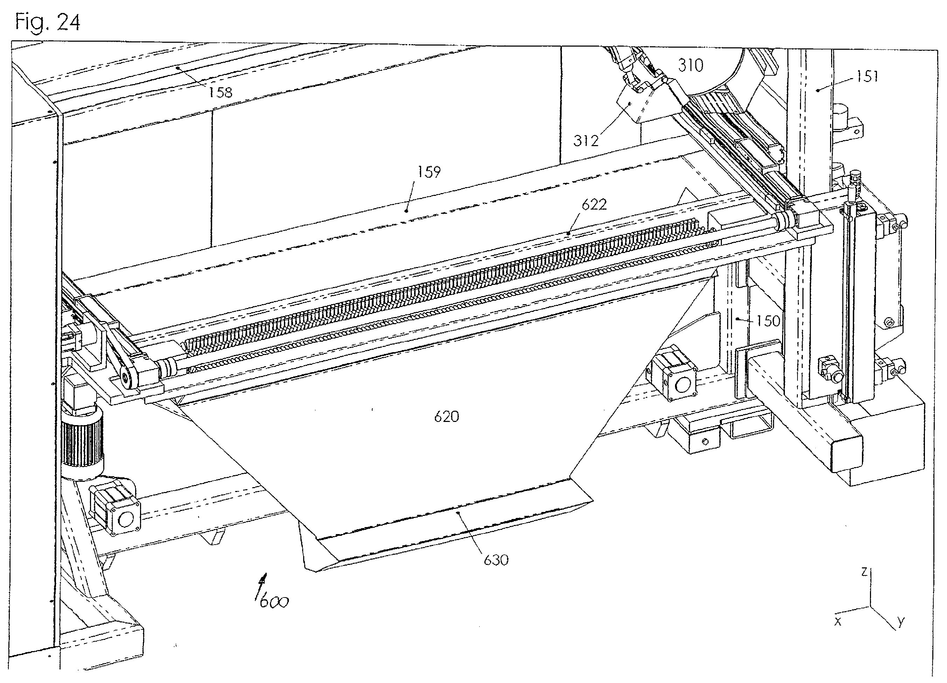

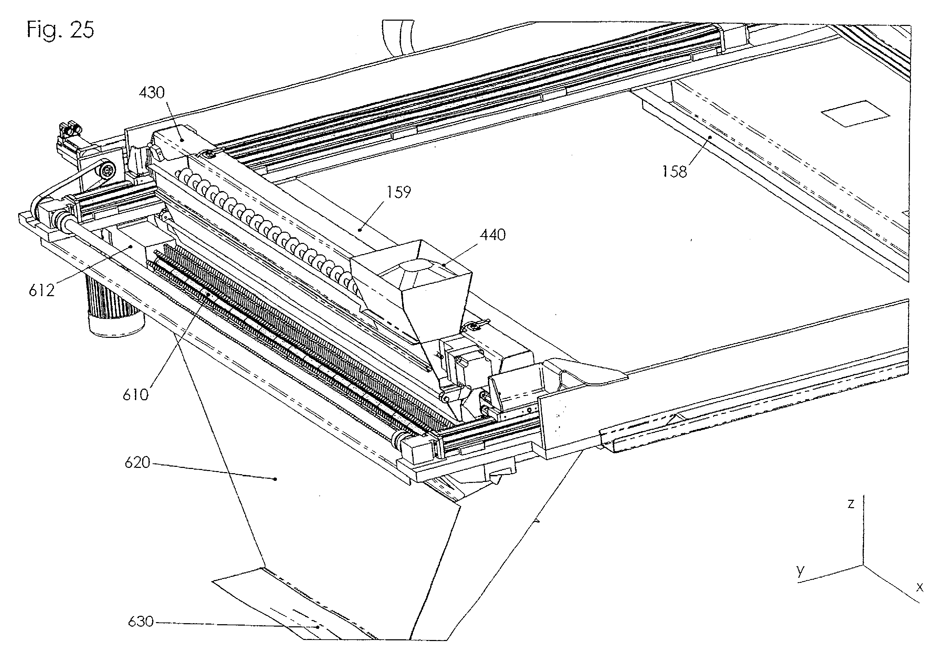

In **Figur 13** ist die Baubox 200 in ihrer Bauposition fixiert. Wie aus Figur 13 ersichtlich ist, wird die die Bauplattform 210 bzw. das Baufeld umgebende Baufeldabdeckung bzw. Baufeldumrahmung zum einen durch die beiden an der Baubox 200 angebrachten horizontalen Abdeckungsplatten 230 und 232 und zum anderen durch zwei anlagenseitige horizontale Begrenzungsplatten 158 und 159 (siehe auch Figuren 24 und 25) gebildet, welche an dem Anlagenrahmen 150 befestigt sind. Die beiden bauboxseitigen Baufeldplatten 230 und 232 erstrecken sich mit ihrer jeweiligen Längsachse parallel zur y-Achse (= Baubox-Querrichtung), und die beiden stationären anlagenrahmenseitigen Baufeldplatten 158 und 159 erstrecken sich mit ihrer jeweiligen Längsachse parallel zu der x-Achse (= Baubox-Längsrichtung).

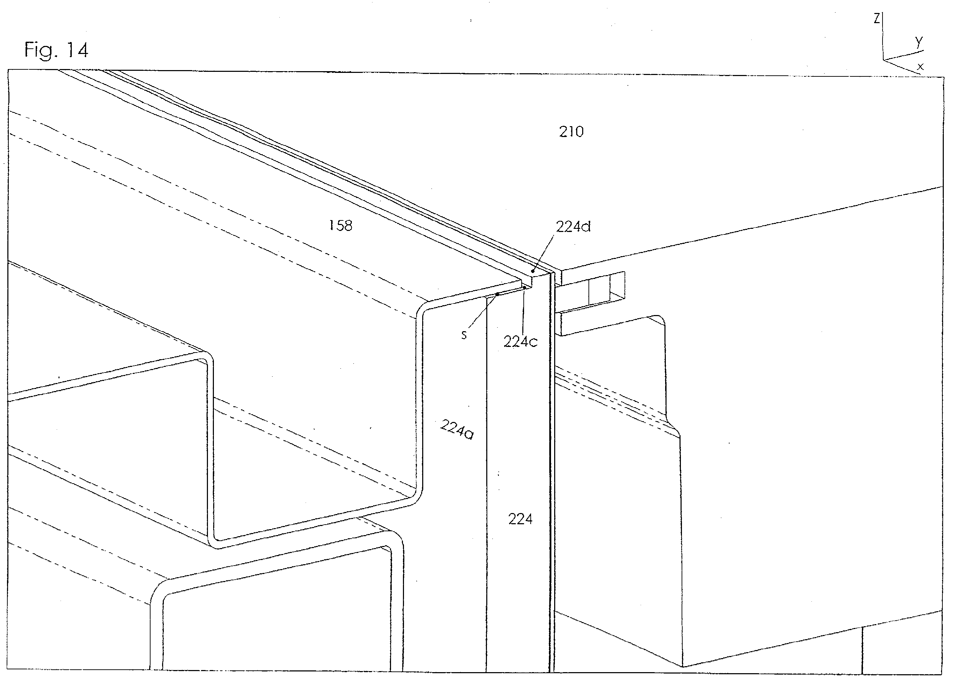

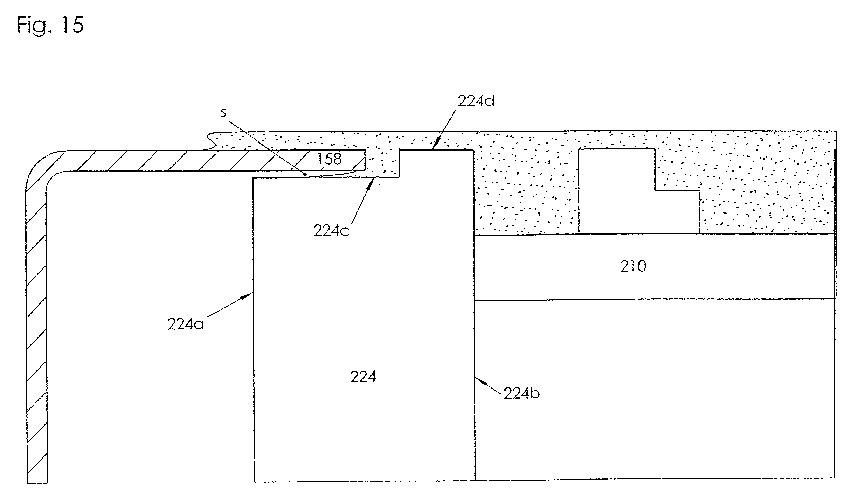

Wie aus den **Figuren 14** **und** **15** ersichtlich ist, weist die erste Seitenwand 224 an ihrer Oberseite bzw. an ihrer oberen Randfläche, welche sich in horizontaler Richtung zwischen der Außenseite 224a und der Innenseite 224b der ersten Seitenwand 224 erstreckt, eine Stufe 224d auf. Die Stufe 224d grenzt an die Innenseite 224b an und ist im Wesentlichen in derselben Horizontalebene angeordnet wie die beiden bauboxseitigen Baufeldplatten 230, 232. Ferner ist an bzw. von der Oberseite der oberen Randfläche eine horizontale Randfläche 224c ausgebildet, welche gegenüber der Stufe 224d abgesenkt ist und eine Dichtfläche ausbildet. Die horizontale Randfläche 224c grenzt an die Außenseite 224a an. Der Betrag bzw. die Höhe, um die die Dichtfläche 224c gegenüber der horizontalen Fläche der Stufe 224d und gegenüber den beiden bauboxseitigen Baufeldplatten 230, 232 abgesenkt ist, ist etwas größer als die Dicke der rahmenseitigen Baufeldplatte/Begrenzungsplatte 158, so dass ausreichend Vertikalspiel zwischen der Unterseite der rahmenseitigen Baufeldplatte 158 und der Dichtfläche 224c vorhanden ist, so dass die Baubox 200 sicher in die Bauposition gefahren werden kann. Der zwischen Dichtfläche 224c und rahmenseitiger Baufeldplatte 158 gebildete Spalt s kann z.B. eine Spalthöhe von 3 bis 20 mm haben, z.B. eine Spalthöhe von 3 bis 10 mm. Des Weiteren hat die Dichtfläche 224c eine derartige Breite, dass einerseits ausreichend Horizontalspiel zwischen der rahmenseitigen Baufeldplatte 158 und der Stufe 224d vorhanden ist, um die Baubox 200 in die Bauposition und aus dieser heraus zu verfahren, und dass andererseits eine ausreichende Baumaterial-Lauflänge bereitgestellt ist. Die Baumaterial-Lauflänge ist diejenige Länge, um die die Dichtfläche 224d von der rahmenseitigen Baufeldplatte 158 überragt wird (siehe Fig. 15), d.h. die Baumaterial-Lauflänge entspricht der Länge des Spalts, der zwischen Dichtfläche 224c und rahmenseitiger Baufeldplatte 158 gebildet ist. Die Baumaterial-Lauflänge ist derart gewählt, dass sich das Baumaterial in dem Spalt s totläuft (siehe Figur 15). Mit anderen Worten bildet sich in dem Spalt s ein Schüttkegel aus dem Baumaterial aus, wobei die Länge des Schüttkegels geringer ist als die Baumaterial-Lauflänge. Die derart geformte Dichtung zwischen Baubox 200 und rahmenseitiger Baufeldplatte 158 wird als Schüttkegeldichtung oder alternativ als Labyrinthdichtung bezeichnet.

In der gleichen Weise ist auch die zweite Seitenwand 226 mit einer Stufe versehen, um eine Schüttkegeldichtung zwischen der Baubox 200 und der rahmenseitigen Baufeldplatte 159 auszubilden.

Die Baubox 200 kann somit über den integrierten Fahrantrieb 250 entlang der x-Richtung in die Bauposition gefahren werden und mit dem obigen Bauboxfixierungssystem in der Bauposition fixiert werden, wobei unmittelbar nach der Fixierung der Baubox 200 mit dem Baujob begonnen werden kann. Weitere Schritte wie z.B. ein Anheben der Baubox 200 sind nicht erforderlich. Ferner kann die Anlagenhöhe gering gehalten werden, da die Baufeldhöhe im Wesentlichen der Bauboxhöhe entspricht.

### Mischvorrichtung 300

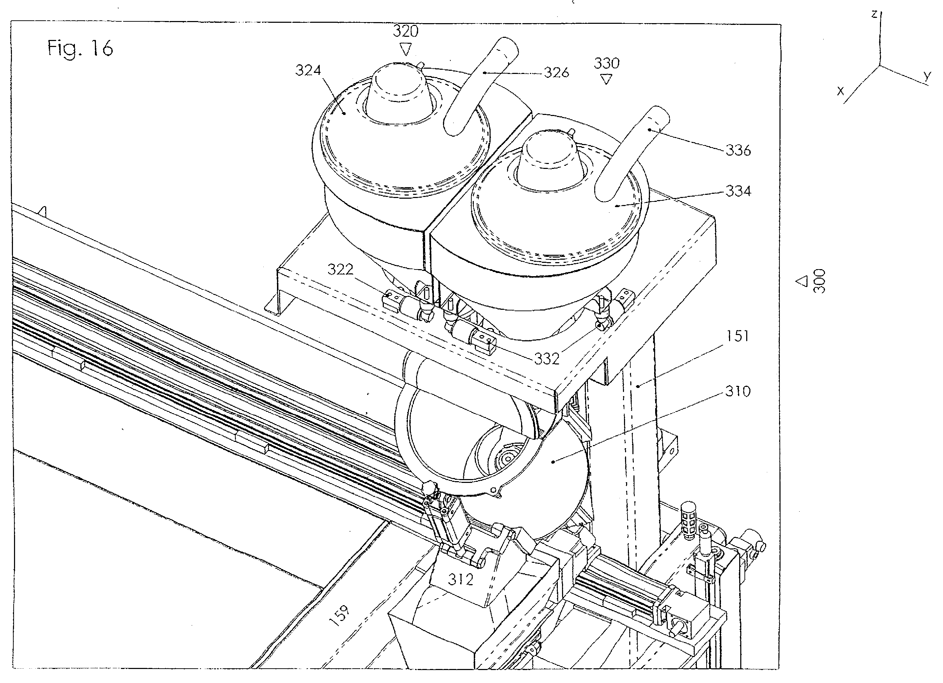

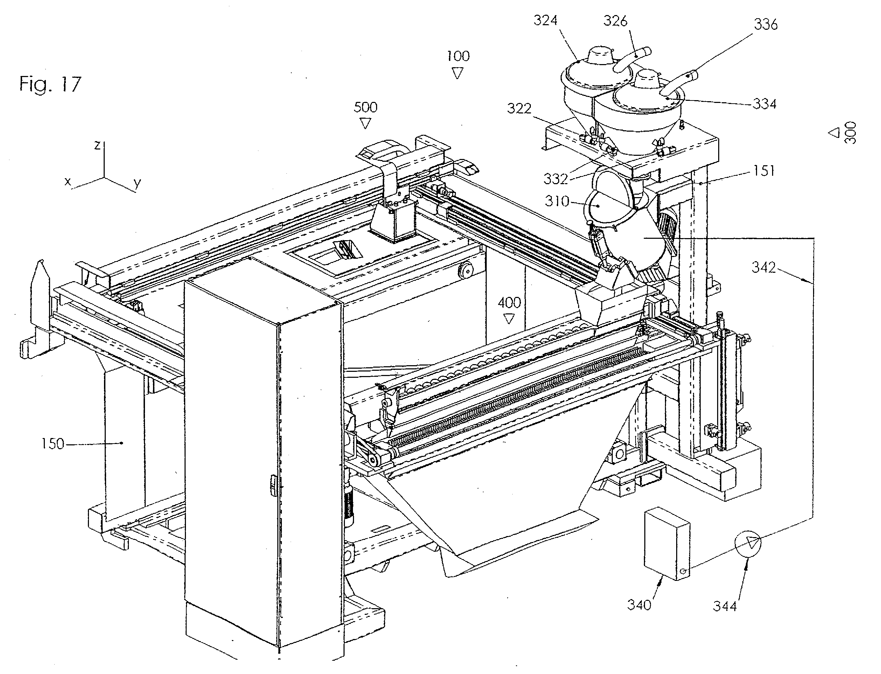

Im Folgenden wird unter Bezugnahme auf die **Figuren 16** **und** **17** eine erfindungsgemäße Mischvorrichtung 300 im Detail beschrieben.

Es wird angemerkt, dass die Mischvorrichtung 300 ebenso wie die oben beschriebene Baubox 200 nicht auf die Verwendung der hierin beschriebenen "Druckanlange" beschränkt ist, sondern vielmehr auch in anderen Rapid-Prototyping-Anlagen/Verfahren angewendet werden kann wie z.B. beim Lasersintern.

Die Mischvorrichtung oder Mischeinheit 300 weist einen Mischer 310 auf, mit dem eine homogene Baumaterial-Mischung erzeugt werden kann. Der Mischer ist oberhalb des Beschichters 400 angeordnet und in die Anlage 100 integriert. Der Mischer 310 ist hier als ein zylindrischer Behälter ausgebildet, der eine Mischkammer begrenzt, in der ein Rühr- bzw. Mischelement angeordnet ist, das über einen Mischantrieb antreibbar ist, der an die zentrale Steuereinrichtung angeschlossen ist. Die Mischkammer hat eine trichterförmige Ausgabeöffnung 312, die in der Beschickungsposition des Beschichters 400 (siehe Fig. 16) über dem Beschichter 400 angeordnet ist, so dass dem Beschichter 400 das in dem Mischer 310 frisch zubereitete Baumaterial durch die Ausgabeöffnung 312 zuführbar ist. Der Mischer ist an einer vertikalen Säule 151 des Anlagenrahmens 150 befestigt. Die Ausgabeöffnung 312 des Mischers 310 wird von einer verstellbaren Armatur verschlossen, die von der zentralen Steuereinrichtung angesteuert wird.

Die Mischeinheit 300 weist ferner einen oberhalb des Mischers 310 angeordneten ersten Dosierbehälter 320, in dem frischer Formsand aufgenommen ist, und einen oberhalb des Mischers 310 angeordneten zweiten Dosierbehälter 330 auf, in dem recycelter Formsand aufgenommen ist. Der erste Dosierbehälter 320 und der zweite Dosierbehälter 330 stehen jeweils auf drei Wiegezellen 322, 332, die das Gewicht des zugeordneten Dosierbehälters 320, 330 erfassen und die jeweils an die zentrale Steuereinrichtung angeschlossen sind. Die beiden Dosierbehälter 320, 330 stehen jeweils über eine Rohrleitung, mit dem Mischer 310 in Verbindung. In der jeweiligen Rohrleitung ist eine verstellbare Armatur (z.B. eine Klappe oder Ventil) vorgesehen, die von der zentralen Steuereinrichtung angesteuert wird. Der erste Dosierbehälter 320 und der zweite Dosierbehälter 330 können jeweils über eine nicht gezeigte Saugleitung, die an dem Anschlussstutzen 326, 336 befestigbar ist, mit Formsand befüllt werden, wozu sie jeweils eine Vorrichtung 324, 334 zum Erzeugen von Unterdruck aufweisen.

Ferner kann die Mischeinheit 300 einen oberhalb des Mischers 310 angeordneten dritten Dosierbehälter (nicht gezeigt) aufweisen, in dem ein pulverförmiger Zuschlagstoff enthalten ist, der z.B. über eine Zellenradschleuse in den Mischer 310 eingespeist wird, die mit der zentralen Steuereinrichtung in Verbindung steht.

Ferner kann dem Mischer 310 mittels einer Dosierpumpe 344 durch eine Flüssigkeitsleitung 342 eine Flüssigkeit (hier Aktivator/Härter) aus einem ersten Flüssigkeitsbehälter 340 dosiert und gesteuert zugeführt werden.

Mit der oben beschriebenen Mischeinheit kann das Baumaterial während des Baubetriebs direkt in der Anlage frisch zubereitet und dem Beschichter insbesondere unmittelbar nach der Zubereitung auf kurzem Wege zur Verfügung gestellt werden. Die einzelnen Komponenten werden in Reinform zu der oberhalb des Beschichters in der Beschickungsstation der Anlage angeordneten Mischeinheit gefördert (Feststoffe/Pulver z.B. über eine Saugleitung, Flüssigkeiten z.B. über Pumpen), wo die Baumaterial-Mischung zubereitet wird und nach ihrer Fertigstellung in den Beschichter eingespeist wird, und zwar durch Öffnen der Armatur (z.B. Klappe oder Schieber), die die Ausgabeöffnung 312 beherrscht.

### Beschichter 400

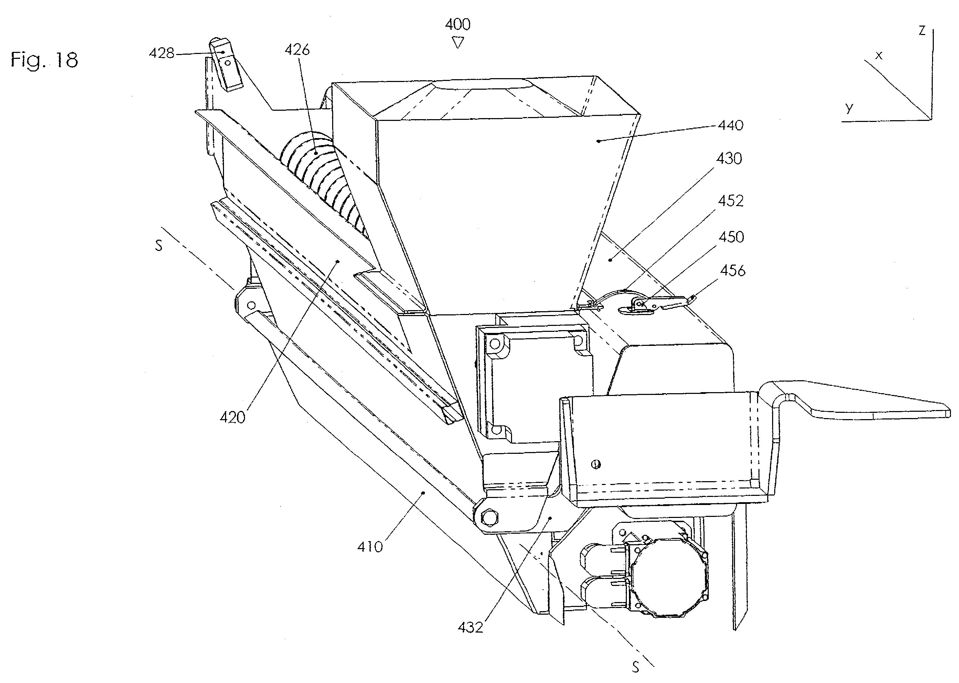

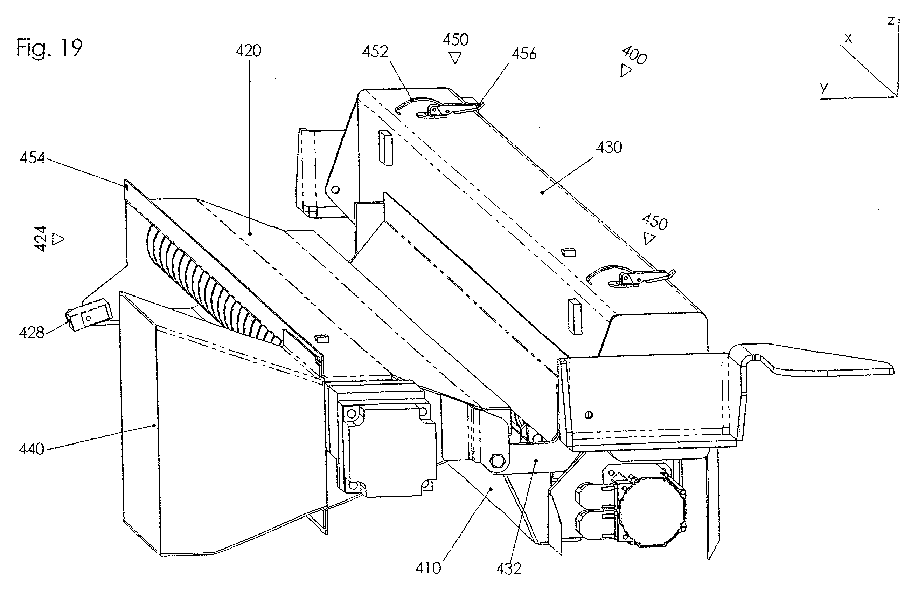

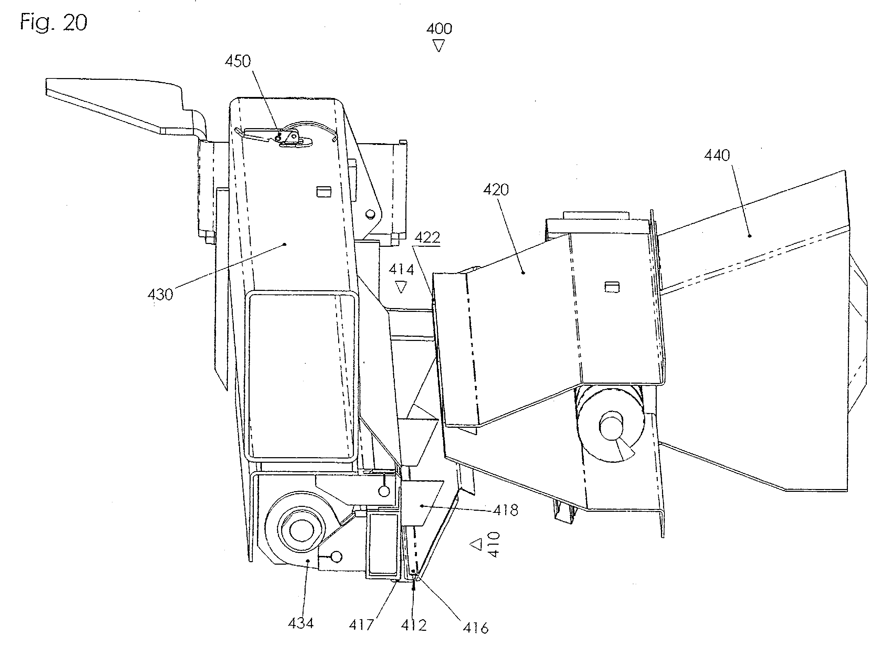

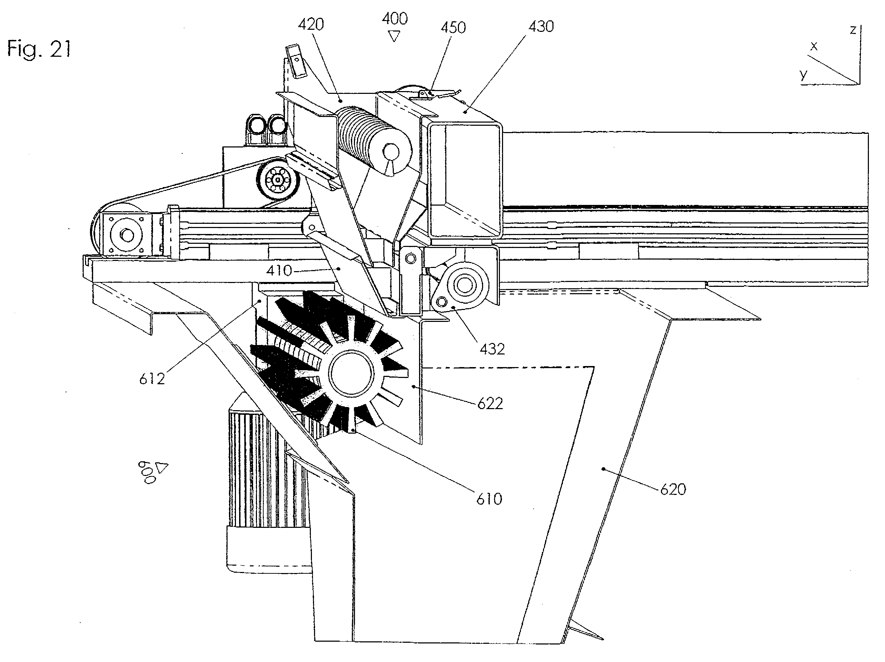

**Die** **Figuren 18 bis 21** zeigen einen horizontal verfahrbaren Beschichter 400 zum Aufbringen der Baumaterial-Schicht auf das Baufeld. Der Beschichter 400 weist einen langgestreckten im Querschnitt trichterförmigen Dosierschacht 410 auf. Der Dosierschacht 410 hat an seiner Unterseite einen Längsschlitz 412 zum Ausgeben des Baumaterials während der Bewegung des Dosierschachts 410 über das Baufeld hin. An seiner Oberseite weist der Dosierschacht 410 eine obere Zuführöffnung 414 auf, durch die dem Dosierschacht 410 Baumaterial zugeführt werden kann.

Der Beschichter 400 weist weiter einen mit dem Dosierschacht mitfahrenden Vorlagebehälter 420 auf, der oberhalb des Dosierschachts 410 angeordnet ist und eine untere Ausgabeöffnung 422 aufweist, die in die Zuführöffnung 414 des Dosierschachtes 410 eintaucht, um den Dosierschacht 410 während des Bauprozesses mit Baumaterial zu versorgen.

Der Dosierschacht 410 und der Vorlagebehälter 420 sind an einem Beschichter-Träger 430 montiert, wobei der Vorlagebehälter 420 schwenkbar mit dem Beschichter-Träger 430 verbunden ist, so dass er von dem Träger 430 und dem Dosierschacht 410 weggeschwenkt werden kann. Im Normalbetrieb ist der Vorlagebehälter 420 wie in Figur 18 gezeigt an dem Träger 430 befestigt/verriegelt und zwar mittels einer Verriegelungsvorrichtung 450, welche einen Greifarm 452 aufweist, der in dem in Figur 18 gezeigten Verriegelungszustand in eine an dem Vorlagebehälter 420 vorgesehene Eingreiföffnung 454 eingreift.

Aufgrund der verschwenkbaren Ausbildung des Vorratsbehälters 420 ist die Zugänglichkeit des Dosierschachts und des Vorratbehälters für eine Reinigung und/oder Reparatur derselben verbessert. Z.B. kann für eine Reinigung und/oder Reparatur des Beschichters 400 zunächst der Baubehälter 200 aus der Anlage 100 heraus gefahren werden, um in der Anlagenmitte Platz zu schaffen, woraufhin der Beschichter 400 in die Mitte der Anlage gefahren wird. Im Anschluss daran kann die Anlage betreten und z.B. der Vorlagebehälter 420 von dem Dosierschacht 410 und dem Träger 430 weggeschwenkt werden, um einzelne Stellen/Teile des Beschichters 400 zu reinigen/reparieren, wie z.B. die Zuführöffnung 414 des Dosierschachts 410, die Ausgabeöffnung 422 des Vorlagebehälters 420 oder die Innenwände des Vorlagebehälters 420 und des Dosierschachts 410. Insbesondere kann der Beschichter 400 aufgrund der verschwenkbaren Ausbildung des Vorlagebehälter 420 groß dimensioniert werden, wobei er dennoch von einer einzelnen Person problemlos gereinigt und/oder repariert werden kann, da z.B. keine Hebevorrichtung oder dergleichen benötigt wird, um den Vorlagebehälter nach oben anzuheben und von dem Dosierschacht wegzubewegen.

In dem Beschichter 400 ist eine Verteilerschnecke 426 angeordnet, die zusammen mit dem Vorlagebehälter 420 verschwenkbar ist und die das Baumaterial entlang der Vorlagebehälterlängsrichtung verteilt.

An der Oberseite des Vorlagebehälters 420 ist ein Zuführtrichter 440 angeschraubt, durch den Baumaterial aus der oberhalb des Beschichters 400 angeordneten Mischvorrichtung 300 in den Vorlagebehälter 420 hinein eingebracht werden kann.

Der Längsschlitz 412 des Dosierschachts 410 ist teilweise von einer Partikelmaterial-Umlenkplatte 416 überdeckt, die im Abstand über dem Längsschlitz 412 parallel zu diesem angeordnet ist.

### Druckkopf 500

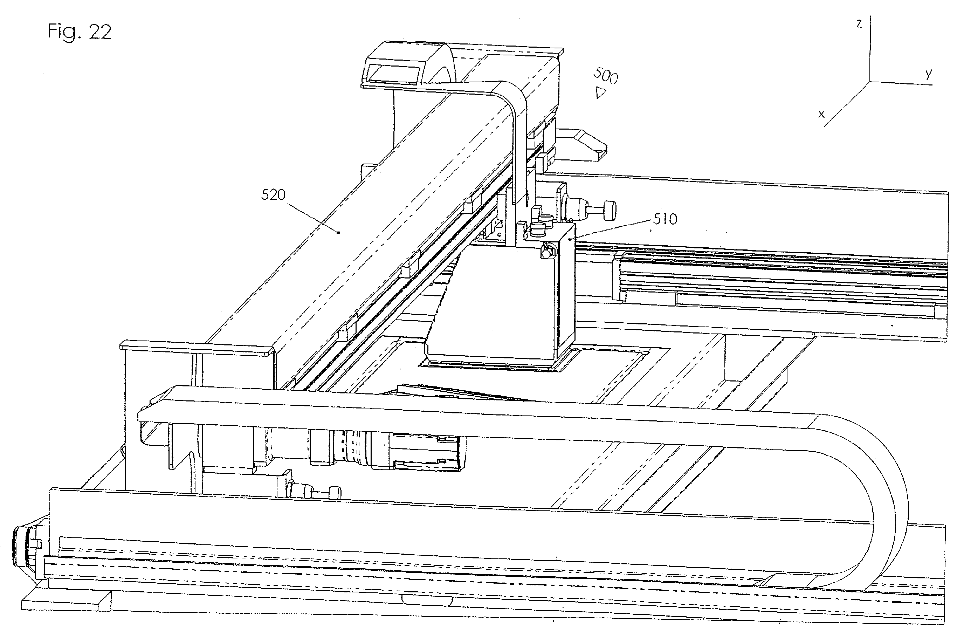

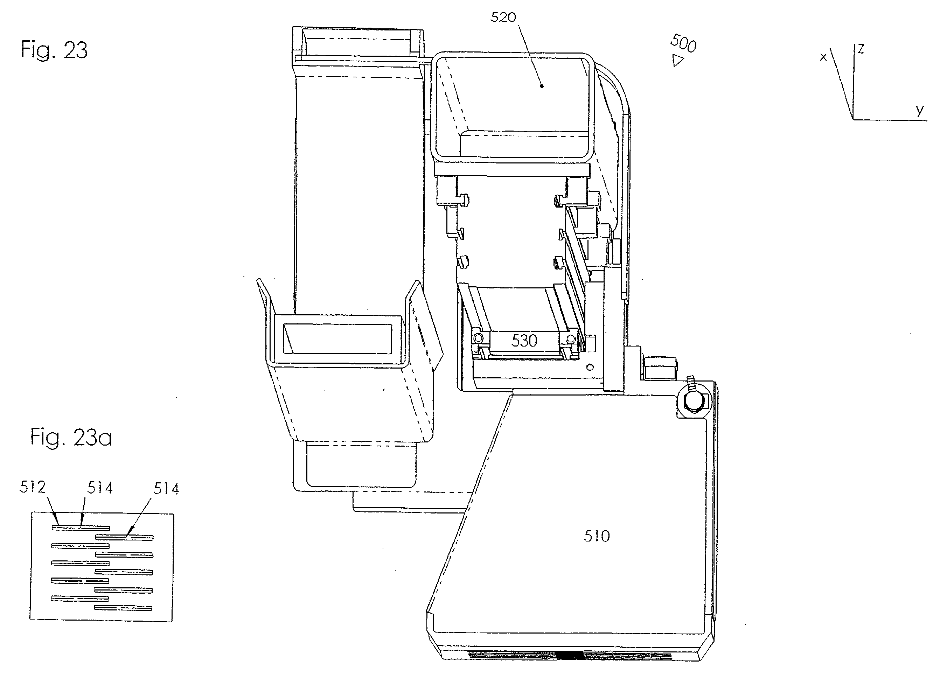

Die in den **Figuren 22** **und** **23** gezeigte Druckvorrichtung 500 weist einen langgestreckten horizontalen Druckkopf-Träger 520 auf, der entlang einer ersten Horizontalrichtung (= x-Richtung) über das Baufeld hin verfahrbar ist.

Ferner weist die Druckvorrichtung 500 einen an dem Träger 520 aufgehängten Druckkopf 510 auf, der mit einer Mehrzahl von Druckkopfdüsen 514 versehen ist zum gesteuerten Ausgeben von Harz auf die zu verfestigende Baumaterial-Schicht. Wie aus Figur 23a ersichtlich ist, hat der Druckkopf 510 eine Mehrzahl von Druckmodulen 512, welche in Druckkopf-Träger-Längsrichtung (x-Richtung) hintereinander in Reihe angeordnet sind und welche jeweils eine Vielzahl von Druckkopfdüsen 514 aufweisen, die in Druckkopf-Träger-Querrichtung (y-Richtung) hintereinander in Reihe angeordnet sind. Die Druckmodule 514 sind in zwei Druckmodul-Reihen angeordnet, die Module 512 der einen Reihe zu den Modulen 512 der anderen Reihe versetzt angeordnet sind.

Der Druckkopf 510 ist an einem Führungsschlitten 530 montiert, welcher an der Trägerunterseite des Druckkopf-Trägers 520 entlang der Druckkopf-Träger-Längsachse verfahrbar geführt ist, so dass der Druckkopf in x-Richtung verfahrbar ist und insgesamt mäanderförmig über das Baufeld verfahren werden kann. Der Druckkopf 510 ist unterhalb des Druckkopf-Trägers 520 angeordnet ist, wobei er den Träger 520 zumindest teilweise untergreift (siehe Figur 23). Der Massenschwerpunkt des Druckkopfes 510 befindet sich unter dem Druckkopf-Träger 520, bevorzugt auch unter dem Führungsschlitten 530.

Mit der oben beschriebenen Druckvorrichtung 500 kann ein von dem Druckkopf 510 erzeugtes Drehmoment um die Druckachse (= Druckkopf-Träger-Längsachse, x-Richtung) stark reduziert werden, wodurch einerseits eine Torsion des Druckkopf-Trägers 520 minimiert wird und somit die Stabilität und Schwingungsarmut des Druckkopfes 510 deutlich verbessert sind und wodurch andererseits Ausrichtfehler der Druckkopfdüsen 514 minimiert und daher die Druckqualität erhöht werden kann. Gleichzeitig werden eine gute Parallelität und ein definierter Abstand der Druckkopfunterseite zu der Oberseite der auf dem Baufeld zu bedruckenden Schicht sichergestellt. Dadurch können seinerseits die Anzahl der Druckkopfdüsen 514 bzw. Druckkopfmodule und folglich der Anlagendurchsatz deutlich erhöht werden, ohne dass hierunter die Qualität des herzustellenden Bauteils leidet. Weiter kann durch die Erhöhung der Stabilität und Schwingungsfestigkeit des Druckkopfes 510 der Abstand der Druckkopf-Unterseite zu der Oberseite der zu bedruckenden Schicht minimiert werden. Zudem können auf den Führungsschlitten 530 und dessen Führung an dem Druckkopf-Träger 520 einwirkende Kippmomente reduziert werden, so dass die Leichtgängigkeit des Führungsschlittens 530 des Druckkopfes insbesondere bei kleinen inkrementellen Bewegungen verbessert ist, was seinerseits zu einer Verbesserung der Druckqualität beiträgt. Des Weiteren kann die Anlage schmaler gebaut werden, da die Parkposition des Druckkopf-Trägers 520, in welcher der Druckkopf-Träger 520 zwischen zwei aufeinander folgenden Druckvorgängen geparkt ist, näher an das Baufeld heran gerückt werden kann, verglichen mit einer herkömmlichen Druckkopfvorrichtung, bei welcher der Druckkopf seitlich neben dem Druckkopf-Träger aufgehängt ist und daher von diesem in Horizontalrichtung wegragt.

### Beschichter-Reinigungsvorrichtung 600

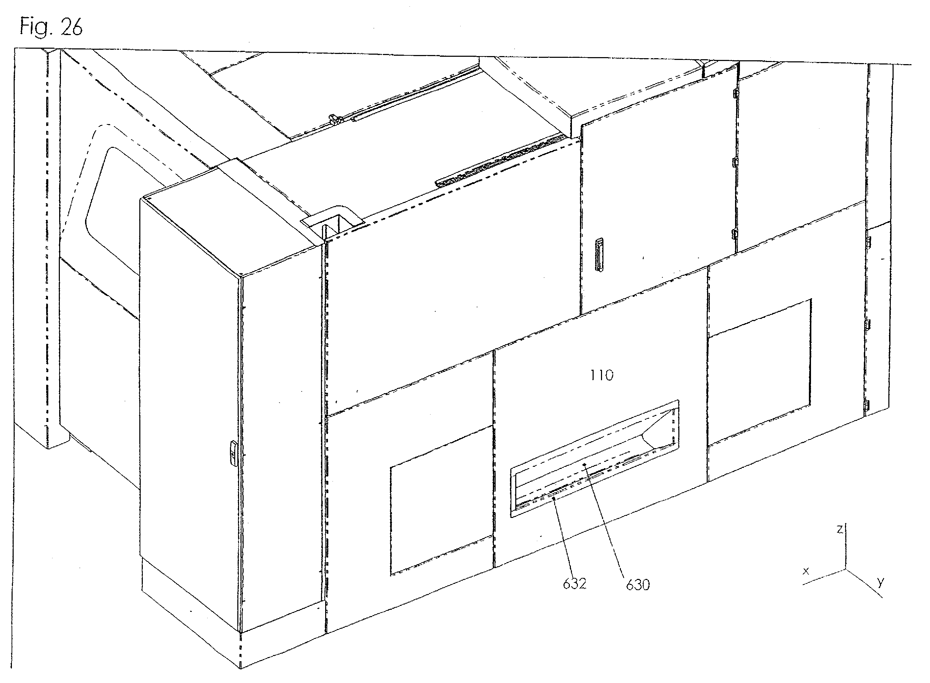

Die **Figuren 24 bis 26** zeigen eine Beschichter-Reinigungsvorrichtung 600 zum Reinigen des Dosierschachts 410 des oben beschriebenen Beschichters 400. Die Beschichter-Reinigungsvorrichtung 600 weist eine langgestreckte Bürste 610 auf, die unterhalb des Dosierschachts 410 des Beschichters 400 in einem Baumaterial-Auffangbehälter 620 aufgenommen ist. Die Länge der Bürste 610 ist mindestens so groß wie die Länge des Dosierschachts 410. Die Bürste 610 ist drehbar abgestützt und wird von einem Wischelement-Antrieb 612 drehbar angetrieben, der an die zentrale Steuereinrichtung angeschlossen ist. Die zentrale Steuereinrichtung steuert den gesamten Reinigungsprozess des Beschichters 400, d.h. das Verfahren des Beschichters 400 zu der Reinigungsvorrichtung 600 hin, die Drehbewegung der Bürste 610, sobald sich der Beschichter 400 in der Reinigungsposition befindet, und das Zurückfahren des Beschichters 400 in seine Parkposition nach der Reinigung. Die Steuereinrichtung kann eine Reinigung des Beschichters 400 z.B. nach einer vorbestimmten Anzahl von Beschichtungsfahrten oder in Abhängigkeit eines Sensorsignals veranlassen, welches anzeigt, ob ein Reinigen des Dosierschachts 410 erforderlich ist. Innerhalb des Baumaterial-Auffangbehälters 620 ist eine Umlenkplatte 622 derart angeordnet, dass Baumaterial, das mittels der Bürste 610 von dem Dosierschacht 410 abgestreift wird, von der Umlenkplatte 622 zu der Unterseite des Baumaterial-Auffangbehälters 620 abgelenkt wird. Der Baumaterial-Auffangbehälter 620 mündet in einen Speicher-Trichter für überschüssiges Baumaterial ein, und der Speicher-Trichter mündet in eine Speicher-Austrittswanne 630 ein. Die Speicher-Austrittswanne 630 steht über einen Schlitz mit einer Ausgabe-Öffnung 632 in Verbindung, welche in einer Außenwand des Anlagengehäuses 110 vorgesehen ist und durch die das in dem Speicher angesammelte Baumaterial während dem Bauprozess entnehmbar, z.B. absaugbar, ist.

### Druckkopf-Reinigungsvorrichtung 700

Das mit dem Druckkopf 510 aufzudruckende Harz ist stark viskos und kann unter gewissen Umständen an den Düsenöffnungen bzw. an der Druckkopfunterseite anhaften. Ebenso kann aufgewirbeltes Partikelmaterial an der Druckkopfunterseite anhaften. Um derartige Anhaftungen/Ablagerungen zu entfernen und die Druckkopf-Unterseite zu reinigen, ist die Druckkopf-Reinigungsvorrichtung 700 bereitgestellt.

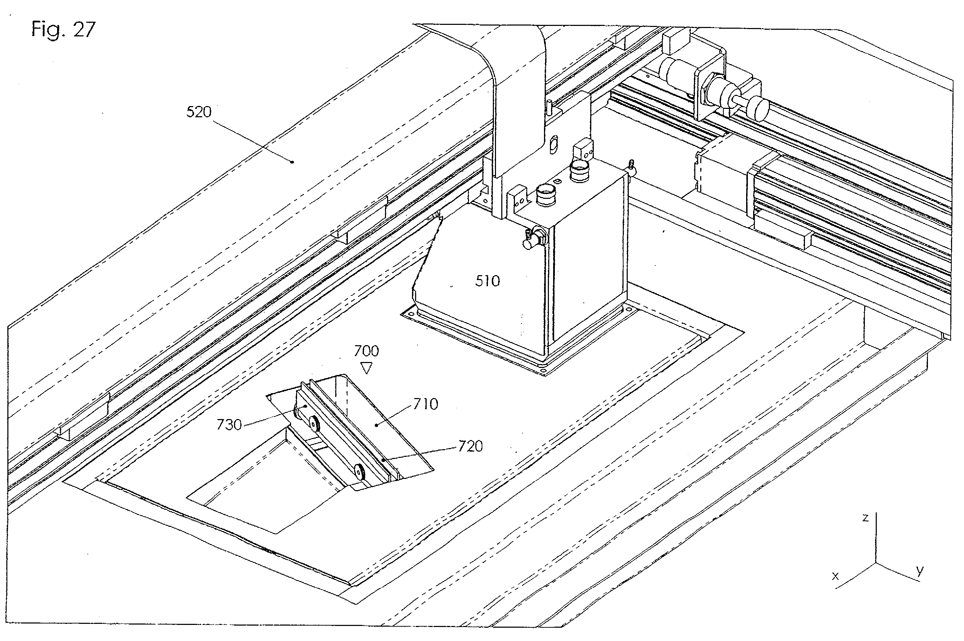

Die in den **Figuren 27 bis 29** gezeigte Reinigungsvorrichtung 700 weist einen Behälter mit einer wannenförmigen Vertiefung 710 auf, in der ein Reinigungsbad/lösungsmittel (nicht gezeigt) aufgenommen ist. Zum Zuführen und Abführen des Lösungsmittels sind an einem unteren Wannenabschnitt ein Zuführstutzen und ein Abführstutzen ausgebildet. Die Reinigungsvorrichtung 700 weist ferner zwei langgestreckte streifenförmige Wischlippen 720 auf, welche aus einem flexiblen Gummimaterial hergestellt sind. Die Wischlippen 720 erstrecken sich entlang der Wannenlängsrichtung und haben eine Länge die nur geringfügig kleiner ist als die der Wanne. Die beiden Wischlippen 720 sind von einem langgestreckten Trägerelement 730 gehalten. Das Trägerelement 730 weist einen im Querschnitt rechteckigen Halteteil auf, in dessen Oberseite zwei Längsnuten ausgebildet sind, in die die Wischlippen 720 eingesteckt sind. Zudem sind die Wischlippen 720 durch jeweils zwei Schrauben seitlich fixiert, welche in eine Seitenfläche des Halteteils eingeschraubt sind. Das Halteteil ist über drei Schrauben an einer Welle befestigt. Die Welle ist an den beiden in Längsrichtung gegenüberliegenden Wandseiten der Wanne drehbar abgestützt. Die Drehbewegung der Welle wird von der zentralen Steuervorrichtung gesteuert.

Durch die gesteuerte Drehbewegung der Welle können die beiden Wischlippen 720 somit zwischen der in Figur 2 gezeigten Druckkopf-Reinigungsposition und der in Figur 3 gezeigten Wischlippen-Regenerationspositionen hin- und hergeschwenkt werden.

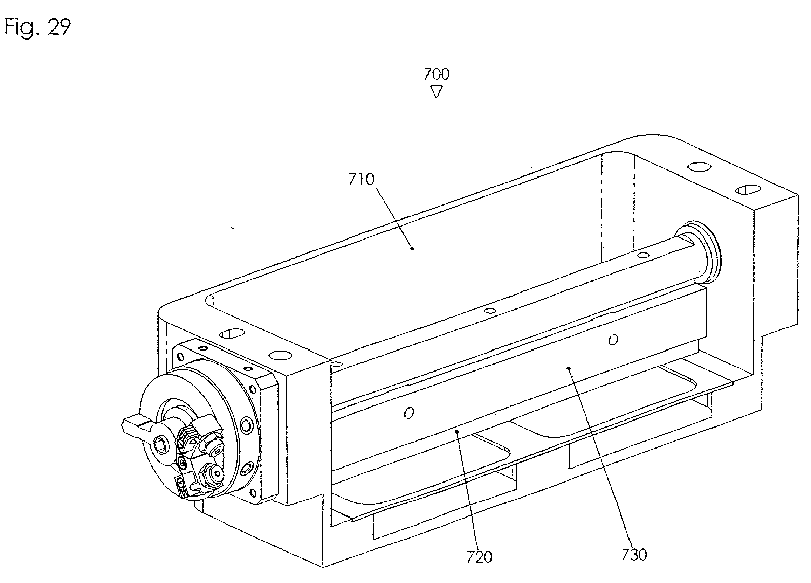

Dabei wird die Drehbewegung der Welle derart gesteuert, dass sich die beiden Wischlippen grundsätzlich in der in Figur 29 gezeigten Position befinden, in der die Wischlippen 720 in das Reinigungsbad eintauchen, so dass an den Wischlippen anhaftendes Bindemittel und Partikelmaterial in dem Reinigungsbad gelöst werden kann oder zumindest von den Wischlippen in das Bad übergeht, wodurch die Wischlippen 720 selbstständig gereinigt/regeneriert werden. Der Füllstand des Reinigungsbads in der Vertiefung 710 ist dabei bevorzugt derart gewählt, dass zumindest der aus dem Halteteil herausragende Wischlippenteil vollständig in das Reinigungsbad eintaucht.

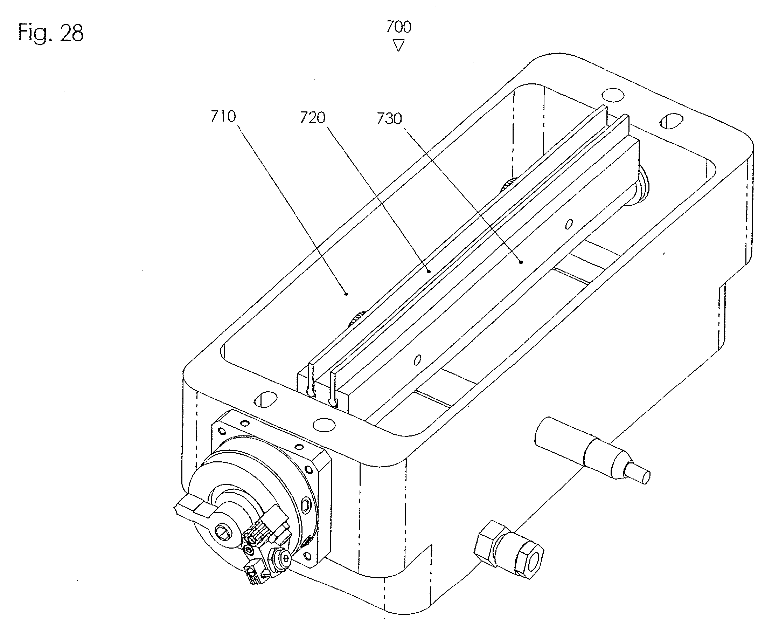

Nachdem eine vorbestimmte Anzahl von Druckfahrten absolviert wurde, veranlasst die Steuereinrichtung eine Drehbewegung der Welle um 180°, so dass die beiden Wischlippen 720 aus der in Figur 29 gezeigten Regenerationsposition in die in Figur 28 gezeigte Druckkopf-Reinigungsposition gebracht werden. Zudem steuert die Steuereinrichtung den Druckkopf 510 derart, dass dieser zu der Reinigungsvorrichtung 700 hin und (ggf. mehrmals) über diese hinweg fährt, wodurch seine Unterseite gereinigt wird.

Anschließend werden die Wischlippen 720 wieder in ihre Regenerationsposition bewegt und der gereinigte Druckkopf 510 in seine Parkposition gefahren.

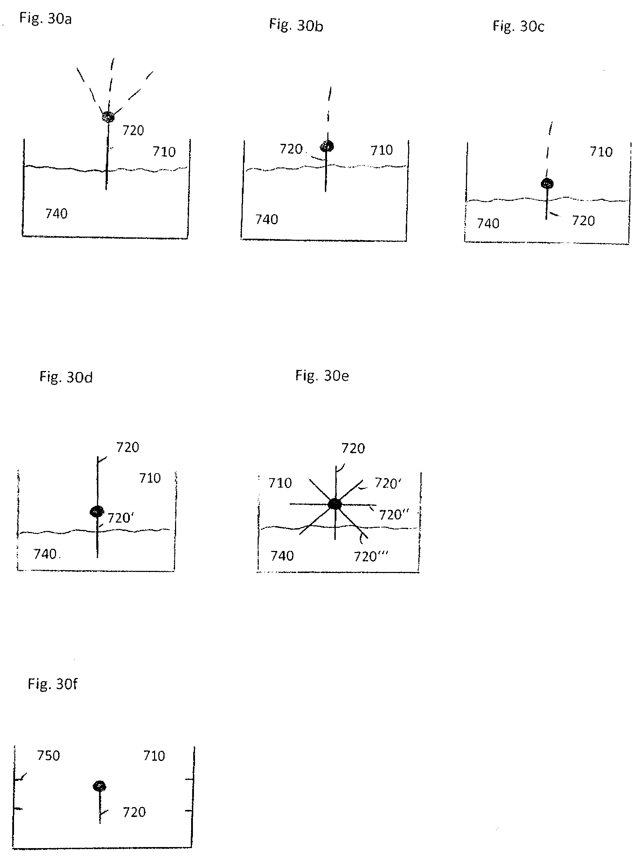

Wie in **Figur 30f** gezeigt (die Druckkopf-Reinigungsposition ist gestrichelt gezeichnet), können in der Wanne 710, insbesondere an den Seitenwänden der Wanne 710, mehrere Düsen 750 angeordnet sein, mit denen die beiden Wischlippen 720 in ihrer Regenerationsposition abgespritzt werden können. Die Düsen 710 können zusätzlich oder alternativ zu dem Reinigungsbad vorgesehen sein.

Weitere Ausführungsformen der Druckkopf-Reinigungsvorrichtung sind in den **Figuren 30a bis 30e** gezeigt, wobei die Druckkopf-Reinigungsposition gestrichelt gezeichnet ist.

## Patentansprüche

1. Beschichter (400) für eine Anlage zum schichtweisen Aufbau eines Formkörpers durch Ausbilden übereinander liegender Schichten aus einem Baumaterial, insbesondere Partikelmaterial, und durch selektives Verfestigen eines Teilbereichs der jeweiligen Baumaterial-Schicht vor dem Ausbilden der nächstfolgenden Schicht,
wobei der Beschichter (400) zum Aufbringen einer Baumaterial-Schicht auf ein Baufeld horizontal verfahrbar ist,
wobei der Beschichter (400) einen langgestreckten Dosierschacht (410) aufweist, an dessen Unterseite ein Längsschlitz (412) zum Ausgeben des Baumaterials während der Bewegung des Dosierschachts (410) über das Baufeld hin vorgesehen ist und der eine obere Zuführöffnung (414) aufweist zum Zuführen von Baumaterial in den Dosierschacht (410),
wobei der Beschichter (400) einen Vorlagebehälter (420) aufweist, der oberhalb des Dosierschachts (410) angeordnet ist und eine untere Ausgabeöffnung (422) aufweist zum Zuführen von Baumaterial aus dem Vorlagebehälter (420) in den Dosierschacht (410) durch die obere Zuführöffnung (414) des Dosierschachts (410) hindurch, und
wobei der Dosierschacht (410) und der Vorlagebehälter (420) an einem Beschichter-Träger (430) montiert sind, **dadurch gekennzeichnet, dass**
der Dosierschacht (410) und/oder der Vorlagebehälter (420) an dem Beschichter (400) um eine Schwenkachse (S) in eine Reinigungsposition verschwenkbar angeschlossen sind, in welcher die Ausgabeöffnung (422) des Vorlagebehälters (420) und die Zuführöffnung (414) des Dosierschachts (410) freiliegen.

2. Beschichter (400) nach Anspruch 1, wobei die Schwenkachse (S), um die der Vorlagebehälter (420) und/oder der Dosierschacht (410) verschwenkbar sind, parallel ist zu den Längsachsen des Dosierschachts (410) und des Vorlagebehälters (420).

3. Beschichter (400) nach Anspruch 1 oder 2, wobei die Zuführöffnung (414) des Dosierschachts (410) an dessen Oberseite ausgebildet ist und die Ausgabeöffnung (422) des Vorlagebehälters (420) an dessen Unterseite ausgebildet ist, und wobei der Dosierschacht (410) und der Vorlagebehälter (420) übereinander an dem Beschichter-Träger (430) montiert sind.

4. Beschichter (400) nach einem der Ansprüche 1 bis 3, wobei der Vorlagebehälter (420) mit dem Beschichter-Träger (430) schwenkbar verbunden ist.

5. Beschichter (400) nach Anspruch 4, wobei zwischen dem Vorlagebehälter (420) und dem Beschichter (400) eine Verriegelungsvorrichtung (450) zum Verriegeln des Vorlagebehälters (420) an dem Beschichter (400) ausgebildet ist.

6. Beschichter (400) nach Anspruch 5, wobei die Verriegelungsvorrichtung (450) zwischen Beschichter-Träger (430) und Vorlagebehälter (420) vorgesehen ist.

7. Beschichter (400) nach Anspruch 6, wobei die Verriegelungsvorrichtung (450) einen an dem Beschichter-Träger (430) angebrachten Greifarm (452) aufweist, der im Verriegelungszustand in eine an dem Vorlagebehälter (420) vorgesehene Eingreiföffnung (454) eingreift.

8. Beschichter (400) nach einem der Ansprüche 1 bis 7, wobei in dem Vorlagebehälter (420) eine Verteilvorrichtung, angeordnet ist, die zusammen mit dem Vorlagebehälter (420) verschwenkbar ist.

9. Beschichter (400) nach Anspruch 8, wobei die Verteilvorrichtung eine Verteilerschnecke (426) ist.

10. Beschichter (400} nach einem der Ansprüche 1 bis 9, wobei an dem Vorlagebehälter (420) ein Zuführtrichter (440) angebracht ist zum Zuführen von Baumaterial aus einer oberhalb des Beschichters (400) angeordneten Mischvorrichtung (300) in den Vorlagebehälter (420).

11. Beschichter (400) nach einem der Ansprüche 1 bis 10, wobei die untere Ausgabeöffnung (422) des Vorlagebehälters (420) in die Zuführöffnung (414) des Dosierschachts (410) einmündet oder eintaucht.

12. Beschichter (400) nach einem der Ansprüche 1 bis 11, wobei der Längsschlitz (412) des Dosierschachts (410) zumindest teilweise von einer Partikelmaterial-Umlenkplatte (416) überdeckt ist, die im Abstand über dem Längsschlitz (412) parallel zu diesem angeordnet ist.

13. Beschichter nach einem der Ansprüche 1 bis 12, wobei der langgestreckte Dosierschacht (410) im Querschnitt trichterförmig ist.

14. Anlage zum schichtweisen Aufbau eines Formkörpers durch Ausbilden übereinander liegender Schichten aus einem Baumaterial, insbesondere Partikelmaterial, und durch selektives Verfestigen eines Teilbereichs der jeweiligen Baumaterial-Schicht vor dem Ausbilden der nächstfolgende Schicht, wobei die Anlage einen Beschichter (400) nach einem der vorangehenden Ansprüche aufweist.

## Claims

1. A coating device (400) for a plant for the layered construction of a molded body by forming superimposed layers of a construction material, in particular a particulate material, and by selectively solidifying a partial area of the respective construction material layer prior to forming the next layer,
wherein the coating device (400) is movable horizontally for applying a construction material layer to a construction field,
wherein the coating device (400) comprises an elongate metering shaft (410), at the lower side of which a longitudinal slot (412) is provided for outputting the construction material as the metering shaft (410) moves across the construction field, and which comprises an upper feed opening (414) for feeding construction material into the metering shaft (410),
wherein the coating device (400) comprises a charging container (420) disposed above the metering shaft (410) and comprising a lower output opening (422) for feeding construction material from the charging container (420) into the metering shaft (410) through the upper feed opening (414) of the metering shaft (410), and
wherein the metering shaft (410) and the charging container (420) are mounted on a coating device carrier (430),
**characterized in that**
the metering shaft (410) and/or the charging container (420) are connected to the coating device (400) pivotable around a pivot axis (S) into a cleaning position, in which the output opening (422) of the charging container (420) and the feed opening (414) of the metering shaft (410) are exposed.

2. Coating device (400) according to claim 1, wherein the pivot axis (S), around which the charging container (420) and/or the metering shaft (410) are pivotable, is parallel to the longitudinal axes of the metering shaft (410) and the charging container (420).

3. Coating device (400) according to claim 1 or 2, wherein the feed opening (414) of the metering shaft (410) is formed at the top side thereof and the output opening (422) of the charging container (420) is formed at the bottom side thereof, and wherein the metering shaft (410) and the charging container (420) are mounted above one another on the coating device carrier (430).

4. Coating device (400) according to one of claims 1 to 3, wherein the charging container (420) is pivotably connected to the coating device carrier (430).

5. Coating device (400) according to claim 4, wherein between the charging container (420) and the coating device (400) a locking device (450) is formed for locking the charging container (420) on the coating device (400).

6. Coating device (400) according to claim 5, wherein the locking device (450) is provided between the coating device carrier (430) and the charging container (420).

7. Coating device (400) according to claim 6, wherein the locking device (450) comprises a gripping arm (452) mounted to the coating device carrier (430) and engaging in a locking state into an engagement opening (454) provided at the charging container (420).

8. Coating device (400) according to one of claims 1 to 7, wherein in the charging container (420) a distributing device is disposed which is pivotable together with the charging container (420).

9. Coating device (400) according to claim 8, wherein the distributing device is a distributing worm (426).

10. Coating device (400) according to one of claims 1 to 9, wherein at the charging container (420) a feeding funnel (440) is attached for feeding construction material from a mixing device (300) disposed above the coating device (400) into the charging container (420).

11. Coating device (400) according to one of claims 1 to 10, wherein the lower output opening (422) of the charging container (420) leads or plunges into the feed opening (414) of the metering shaft (410).

12. Coating device (400) according to one of claims 1 to 11, wherein the longitudinal slot (412) of the metering shaft (410) is covered at least partially by a particulate material deflector plate (416) that is disposed above the longitudinal slot (412) spaced in parallel thereto.

13. Coating device (400) according to one of claims 1 to 12, wherein the elongate metering shaft (410) has a funnel-shaped cross section.

14. Plant for the layered construction of a molded body by forming superimposed layers of a construction material, in particular a particulate material, and by selectively solidifying a partial area of the respective construction material layer prior to forming the next layer, wherein the plant comprises a coating device (400) according to one of the preceding claims.

## Revendications

1. Système d'enduction (400) pour une installation de réalisation par couches d'un corps moulé par la formation de couches superposées constituées d'un matériau de construction, plus particulièrement d'un matériau particulaire et par solidification sélective d'une zone partielle de la couche de matériau de construction correspondante avant la formation de la couche suivante,
le système d'enduction (400) pouvant être déplacé horizontalement pour l'application d'une couche de matériau de construction sur un chantier,
le système d'enduction (400) comprenant un bac de dosage allongé (410), sur le côté inférieur duquel se trouve une fente longitudinale (412) pour la distribution du matériau de construction pendant le déplacement du bac de dosage (410) au-dessus du chantier et qui comprend une ouverture d'alimentation supérieure (414) pour l'introduction de matériau de construction dans le bac de dosage (410),
le système d'enduction (400) comprenant un réservoir (420) qui se trouve au-dessus du bac de dosage (410) et une ouverture de distribution inférieure (422) pour l'introduction de matériau de construction du réservoir (420) vers le bac de dosage (410) à travers l'ouverture d'alimentation supérieure (414) du bac de dosage (410) et
le bac de dosage (410) et le réservoir (420) sont montés sur un support de système d'enduction (430),
**caractérisé en ce que**
le bac de dosage (410) et/ou le réservoir (420) sont raccordés au système d'enduction (400) de manière pivotante autour d'un axe de pivotement (S) dans une position de nettoyage, dans laquelle l'ouverture de distribution (422) du réservoir (420) et l'ouverture d'alimentation (414) du bac de dosage (410) sont dégagées.

2. Système d'enduction (400) selon la revendication 1, l'axe de pivotement (S), autour duquel le réservoir (420) et/ou le bac de dosage (410) peuvent être pivotés, étant parallèle aux axes longitudinaux du bac de dosage (410) et du réservoir (420).

3. Système d'enduction (400) selon la revendication 1 ou 2, l'ouverture d'alimentation (414) du bac de dosage (410) étant disposée sur son côté supérieur et l'ouverture de distribution (422) du réservoir (420) étant disposée sur son côté inférieur et le bac de dosage (410) et le réservoir (420) étant montés l'un au-dessus de l'autre sur le support de système d'enduction (430).

4. Système d'enduction (400) selon l'une des revendications 1 à 3, le réservoir (420) étant relié de manière pivotante avec le support du système d'enduction (430).

5. Système d'enduction (400) selon la revendication 4, un dispositif de verrouillage (450) étant disposé entre le réservoir (420) et le système d'enduction (400), pour le verrouillage du réservoir (420) sur le système d'enduction (400).

6. Système d'enduction (400) selon la revendication 5, le dispositif de verrouillage (450) étant prévu entre le support du système d'enduction (430) et le réservoir (420).

7. Système d'enduction (400) selon la revendication 6, le dispositif de verrouillage (450) comprend un bras de préhension (452) monté sur le support du système d'enduction (430), qui s'emboîte, dans l'état de verrouillage, dans une ouverture d'emboîtement (454) prévue sur le réservoir (420).

8. Système d'enduction (400) selon l'une des revendications 1 à 7, un dispositif de répartition étant disposé dans le réservoir (420), qui peut être pivotée conjointement avec le réservoir (420).

9. Système d'enduction (400) selon la revendication 8, le dispositif de répartition étant une vis sans fin de répartition (426).

10. Système d'enduction (400) selon l'une des revendications 1 à 9, une trémie d'alimentation (440) étant montée sur le réservoir (420), pour l'introduction de matériau de construction provenant d'un dispositif de mélange (300) disposé au-dessus du système d'enduction (400) dans le réservoir (420).

11. Système d'enduction (400) selon l'une des revendications 1 à 10, l'ouverture de distribution inférieure (422) du réservoir (420) débouchant ou plongeant dans l'ouverture d'alimentation (414) du bac de dosage (410).

12. Système d'enduction (400) selon l'une des revendications 1 à 11, la fente longitudinale (412) du bac de dosage (410) étant recouverte au moins partiellement par un déflecteur en matériau particulaire (416), qui est disposée à une certaine distance au-dessus de la fente longitudinale (412) parallèlement à celle-ci.

13. Système d'enduction (400) selon l'une des revendications 1 à 12, le bac de dosage allongé (410) présentant une section transversale en forme d'entonnoir.

14. Installation pour la réalisation couche par couche d'un corps moulé en formant des couches superposées constituées d'un matériau de construction, plus particulièrement un matériau particulaire et par solidification sélective d'une zone partielle de la couche de matériau de construction correspondante avant la formation de la couche suivante, l'installation comprenant un système d'enduction (400) selon l'une des revendications précédentes.
